(19) Europäisches Patentamt
European Patent Office
Office européen des brevets

(11) EP 4 475 259 B1

(12) EUROPEAN PATENT SPECIFICATION

(45) Date of publication and mention of the grant of the patent:
**18.02.2026 Bulletin 2026/08**

(21) Application number: **24166633.8**

(22) Date of filing: **27.03.2024**

(51) International Patent Classification (IPC):
***H01M 10/0567*** *(2010.01)* *H01M 4/131* *(2010.01)*
*H01M 4/38* *(2006.01)* *H01M 4/525* *(2010.01)*
*H01M 4/587* *(2010.01)* *H01M 4/62* *(2006.01)*
*H01M 10/0525* *(2010.01)* *H01M 10/0568* *(2010.01)*
*H01M 10/0569* *(2010.01)*

(52) Cooperative Patent Classification (CPC):
**H01M 10/0567;** H01M 4/131; H01M 4/386; H01M 4/525; H01M 4/587; H01M 4/625; H01M 10/0525; H01M 10/0568; H01M 10/0569; H01M 2300/0025; Y02E 60/10

(54) **ELECTROLYTE SOLUTION FOR RECHARGEABLE LITHIUM BATTERY AND RECHARGEABLE LITHIUM BATTERY INCLUDING THE SAME**

ELEKTROLYTLÖSUNG FÜR EINE WIEDERAUFLADBARE LITHIUMBATTERIE UND WIEDERAUFLADBARE LITHIUMBATTERIE DAMIT

SOLUTION ÉLECTROLYTIQUE POUR BATTERIE AU LITHIUM RECHARGEABLE ET BATTERIE AU LITHIUM RECHARGEABLE LA COMPRENANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **05.06.2023 KR 20230072448**

(43) Date of publication of application:
**11.12.2024 Bulletin 2024/50**

(73) Proprietor: **Samsung SDI Co., Ltd.**
**Yongin-si, Gyeonggi-do 17084 (KR)**

(72) Inventors:
- **Kim, Sanghyung**
  **17084 Yongin-si, Gyeonggi-do (KR)**
- **Bae, Tae Hyon**
  **17084 Yongin-si, Gyeonggi-do (KR)**
- **Lee, Harim**
  **17084 Yongin-si, Gyeonggi-do (KR)**
- **Son, Seunghyeon**
  **17084 Yongin-si, Gyeonggi-do (KR)**
- **Kim, Yunhee**
  **17084 Yongin-si, Gyeonggi-do (KR)**
- **Yu, Arum**
  **17084 Yongin-si, Gyeonggi-do (KR)**

(74) Representative: **Gulde & Partner**
**Patent- und Rechtsanwaltskanzlei mbB**
**Berliner Freiheit 2**
**10785 Berlin (DE)**

(56) References cited:
**EP-A1- 4 254 584** **WO-A1-2022/203206**
**WO-A1-2023/003133** **US-A1- 2020 212 486**
**US-A1- 2023 318 034**

- **ELDESOKY A ET AL: "Cycling Performance of NMC811 Anode-Free Pouch Cells with 65 Different Electrolyte Formulations", 6 December 2021 (2021-12-06), XP093205934, Retrieved from the Internet <URL:https://iopscience.iop.org/article/10.1149/1945-7111/ac39e3/pdf> DOI: 10.1149/1945-7111/ac39e3]**
- **DING FEI ET AL: "Effects of Cesium Cations in Lithium Deposition via Self-Healing Electrostatic Shield Mechanism", THE JOURNAL OF PHYSICAL CHEMISTRY C, vol. 118, no. 8, 14 February 2014 (2014-02-14), US, pages 4043 - 4049, XP093191504, ISSN: 1932-7447, DOI: 10.1021/jp4127754**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 475 259 B1

## Description

## BACKGROUND

### 1. Field

An electrolyte solution for a rechargeable lithium battery and a rechargeable lithium battery including the same are disclosed.

### 2. Description of the Related Art

Recently, with the rapid spread of electronic devices using batteries such as mobile phones, notebook computers, and electric vehicles, demand for rechargeable batteries having high energy density and high capacity is rapidly increasing. Accordingly, research and development for improving the performance of rechargeable lithium batteries is actively progressing.

A rechargeable lithium battery includes a positive electrode and a negative electrode including an active material capable of intercalating and deintercalating lithium ions, and an electrolyte solution, and electrical energy is produced by oxidation and reduction reactions when lithium ions are intercalated/deintercalated at the positive and negative electrodes. For example, A. Eldesoky et al. reports on cycle life results from 65 electrolyte mixtures consisting of various additives or co-solvents added to a dual-salt base electrolyte (Journal of The Electrochemical Society, 2021, 168, 120508). F. Ding et al. describes electrochemical behavior of cesium cations (Cs) as the typical non-Li cation suitable for the self-healing electrostatic shield (SHES) mechanism to reveal its effects on preventing the growth of Li dendrites (J. Phys. Chem. C2014, 118, 4043 - 4049). WO 2023/003133 A1 discloses an electrolyte for a rechargeable lithium battery, the electrolyte comprising: a non-aqueous organic solvent; a lithium salt; and an additive, wherein the additive is a composition comprising a first compound and a second compound, the first compound being a cesium salt compound, the second compound being represented by chemical formula 1. WO 2022/203206 A1 describes an electrolyte for a rechargeable lithium battery comprising a nonaqueous organic solvent, a lithium salt, and an additive. US 2020/0212486 A1 relates to a lithium ion battery including a disclosed electrolyte may be operable over a temperature range of from -50 °C. to 60 °C. The electrolytes include a lithium salt, a non-aqueous carbonate-based solvent, a cesium salt and/or rubidium salt as a first additive, and two or more additional additives.

Recently, in order to use it as a driving power source for hybrid vehicles or electric vehicles or as a power source for power storage, etc., research on a rechargeable lithium battery having high capacity, high energy density, and high safety is being actively researched.

In a rechargeable lithium battery, an electrolyte solution plays an important role in delivering lithium ions, wherein a type (or kind) of electrolyte solution containing an organic solvent and a lithium salt exhibits superbly high ion conductivity and is generally used. This electrolyte solution plays an important role of determining or contributing to safety and performance of the rechargeable lithium battery.

Recently, as a high-capacity and high-energy density battery is required or desired, it is necessary or desirable to design a battery operatable at a high voltage of 4.5 V or more having high density of electrodes. However, the positive electrode is deteriorated under harsh conditions such as a high voltage, while lithium dendrite grows on the negative electrode surface, which accelerates a side reaction between electrodes and electrolyte solution and causes a problem of reducing cycle-life of the battery and deteriorating battery safety due to gas generation and/or the like.

In order to solve the problem, methods of protecting the electrodes through a surface treatment and suppressing or reducing the side reaction with the electrolyte solution have been suggested. However, it has been reported that the surface treatment of the positive electrode lacks the protection effect under the high-voltage driving conditions, and the surface treatment of the negative electrode may deteriorate capacity. Therefore, in the design of a high-capacity electrode that can be driven at a high voltage, development of an electrolyte solution capable of improving safety and performance of a battery is required or desired.

## SUMMARY

The invention is defined by the appended claims. The description that follows is subjected to this limitation. Any disclosure lying outside the scope of said claims is only intended for illustrative as well as comparative purposes. An embodiment of the present disclosure provides an electrolyte solution for a lithium secondary battery which suppresses or reduces side reactions of the electrolyte solution and collapse of the electrode structure, effectively prevents or reduces elution of the positive electrode active material, and suppresses or reduces an increase in internal resistance due to gas generation, thereby securing safety and high-temperature reliability of the battery under high-voltage driving conditions, and improving capacity characteristics and cycle-life characteristics.

Another embodiment is to provide a rechargeable lithium battery including the electrolyte solution.

According to one aspect of the present invention there is provided an electrolyte solution for a rechargeable lithium battery including a non-aqueous organic solvent, a lithium salt, and an additive, wherein the additive includes a first compound represented by Chemical Formula 1 and a second compound that is $CsPF_6$ or a compound represented by Chemical Formula 2, and a weight ratio of the first compound to the second compound is 1: 0.3 to 1: 1.3. The first compound is included in the electrolyte solution in an amount of 0.1 wt% to 10.0 wt% based on a total weight of the electrolyte solution for a rechargeable lithium battery. The second compound is included in the electrolyte solution in an amount of 0.01 wt% to 5 wt% based on a total weight of the electrolyte solution for a rechargeable lithium battery.

Chemical Formula 1

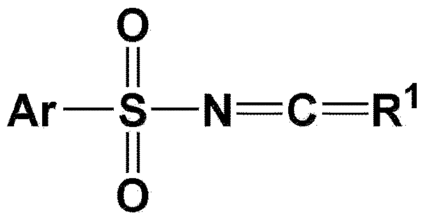

In Chemical Formula 1, Ar is a substituted or unsubstituted C6 to C30 aryl group, or a substituted or unsubstituted C2 to C30 heterocyclic group, and $R^1$ is O.

Chemical Formula 2

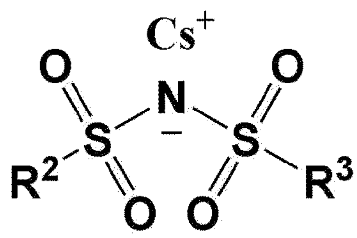

In Chemical Formula 2, $R^2$ and $R^3$ are each independently a fluorine atom, or a C1 to C4 fluoroalkyl group substituted with at least one fluorine atom.

In another embodiment, a rechargeable lithium battery includes a positive electrode including a positive electrode active material; a negative electrode including a negative electrode active material; a separator between the positive electrode and the negative electrode; and the aforementioned electrolyte solution.

The electrolyte solution for a lithium secondary battery according to an embodiment suppresses or reduces side reactions of the electrolyte solution and collapse of the electrode structure, effectively prevents or reduces elution of the positive electrode active material, and suppresses or reduces an increase in internal resistance due to gas generation, thereby securing safety and high-temperature reliability of the battery under high-voltage driving conditions, and improving capacity characteristics and cycle-life characteristics.

## BRIEF DESCRIPTION OF THE DRAWINGS

Features will become apparent to those of skill in the art by describing in detail exemplary embodiments with reference to the attached drawings in which: FIGS. 1-4 are schematic views of a rechargeable lithium battery according to embodiments.

## DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is

referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

As used herein, when specific definition is not otherwise provided, it will be understood that when an element such as a layer, film, region, or substrate is referred to as being "on" another element, it can be directly on the other element or intervening elements may also be present.

Unless otherwise specified in this specification, what is indicated in the singular may also include the plural. In addition, unless otherwise specified, "A or B" may specify "including A, including B, or including A and B".

As used herein, "combination thereof" may refer to a mixture, laminate, composite, copolymer, alloy, blend, reaction product, and the like of the constituents.

As used herein, when a definition is not otherwise provided, a particle diameter may be an average particle diameter. The term "particle diameter" may refer to the average particle diameter (D50). The term "D50" refers to the diameter of particles having a cumulative volume of 50 volume% in the particle size distribution. The average particle size (D50) may be measured by a method well known to those skilled in the art such as, for example, by a particle size analyzer, or by a transmission electron microscopic image, or a scanning electron microscopic image. In some implementations, a dynamic light-scattering measurement device may be used to perform a data analysis, and the number of particles may be counted for each particle size range. From this calculation, the average particle diameter (D50) value may be easily obtained. In some implementations, a particle diameter can be measured using a laser diffraction method. When measuring a particle diameter by the laser diffraction method, more specifically, the particles to be measured may be dispersed in a dispersion medium, and then may be introduced into a commercially available laser diffraction particle diameter measuring device (e.g., Microtrac MT 3000). Ultrasonic waves of 28 kHz with an output of 60 W may be irradiated to calculate an average particle diameter (D50) on the basis of 50% of the particle diameter distribution in the measuring device.

As used herein, when a definition is not otherwise provided, the term "substituted" refers to replacement of at least one hydrogen of a substituent or a compound by deuterium, a halogen, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group, or a combination thereof.

As used herein, the term "substituted" may refer to replacement of at least one hydrogen of a substituent or a compound by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. For example, the term "substituted" may refer to replacement of at least one hydrogen of a substituent or a compound by deuterium, a halogen, a C1 to C20 alkyl group, a C6 to C30 aryl group, a C1 to C10 fluoroalkyl group, or a cyano group. In some embodiments, the term "substitution" may refer to replacement of at least one hydrogen of a substituent or a compound by deuterium, a halogen group, a C1 to C5 alkyl group, a C6 to C18 aryl group, a C1 to C5 fluoroalkyl group, or a cyano group. For example, the term "substituted" may refer to replacement of at least one hydrogen of a substituent or a compound by deuterium, a cyano group, a halogen, a methyl group, an ethyl group, a propyl group, a butyl group, a phenyl group, a biphenyl group, a terphenyl group, a trifluoromethyl group, or a naphthyl group.

An embodiment provides an electrolyte solution for a rechargeable lithium battery including a non-aqueous organic solvent, a lithium salt, and an additive, wherein the additive includes a first compound represented by Chemical Formula 1, and a second compound that is $CsPF_6$ or a compound represented by Chemical Formula 2, and a weight ratio of the first compound to the second compound is 1: 0.3 to 1: 1.3.

Chemical Formula 1

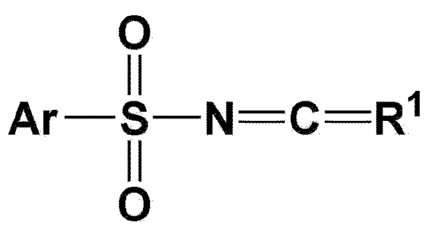

In Chemical Formula 1, Ar is a substituted or unsubstituted C6 to C30 aryl group, or a substituted or unsubstituted C2 to C30 heterocyclic group, and $R^1$ is O.

Chemical Formula 2

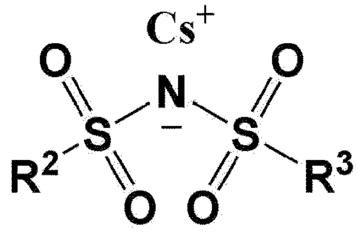

In Chemical Formula 2, $R^2$ and $R^3$ are each independently a fluorine atom, or a C1 to C4 fluoroalkyl group substituted with at least fluorine atom.

The additive may be included in the electrolyte solution in an amount of, for example, 0.1 wt% to 30.0 wt%, 1.0 wt% to 20.0 wt%, or 2.0 wt% to 15.0 wt% based on a total weight of the electrolyte solution for a rechargeable lithium battery.

The weight ratio between the first compound and the second compound is 1:0.3 to 1:1.3, and preferably 1:0.5 to 1:1.25. The electrolyte solution for a rechargeable lithium battery includes the first compound and the second compound as the additive within the aforementioned weight ratio ranges and thus suppresses or reduces the side reaction of the electrolyte solution and structural collapse of the electrodes, effectively prevents or reduces elution of the positive electrode active material, and suppresses or reduces the internal resistance increase due to gas generation, resultantly securing battery safety and high-temperature reliability under high-voltage driving conditions and improving capacity characteristics, cycle-life characteristics, etc. For example, when the weight ratio of the second compound to the first compound is smaller than 0.3, because the battery thickness increase rate according to charges and discharges is not suitably or sufficiently suppressed or reduced, and the cycle-life characteristics and the high-temperature storage characteristics may be deteriorated. When the weight ratio of the second compound to the first compound is larger than 1.3, because the synergistic effect due to combination of the two compounds may be rather deteriorated, the battery thickness increase rate according to charges and discharges may rather increase, resultantly deteriorating the cycle-life characteristics and the high-temperature storage characteristics.

**First Compound**

The first compound is a compound having an isocyanate (-NCO) functional group. The isocyanate functional group acts as an anion receptor and induces a stable formation of an anion (e.g., $PF_6^-$) of a lithium salt, and, for example, by stabilizing lithium salts such as $LiPF_6$, generation of byproducts such as HF due to decomposition of lithium salts can be suppressed or reduced. Accordingly, the decomposition of a lithium salt on the positive electrode surface and the oxidation reaction of the electrolyte solution, which may occur during high-temperature cycle operation of a rechargeable lithium battery, may be suppressed, prevented, or reduced, thereby improving high rate charge/discharge characteristics and swelling characteristics. In addition, the first compound forms a film on the positive electrode surface and thus suppresses or reduces the side reaction with the electrolyte solution and structural collapse of electrodes to improve performance and also effectively prevents or reduces elution of metal components in the positive electrode active material.

The first compound is represented by Chemical Formula 1.

Chemical Formula 1

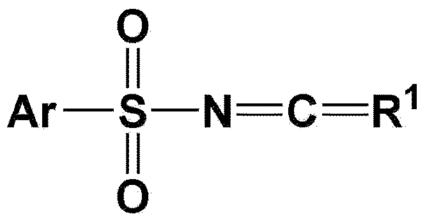

In Chemical Formula 1, Ar is a substituted or unsubstituted C6 to C30 aryl group, or a substituted or unsubstituted C2 to C30 heterocyclic group, and $R^1$ is O.

For example, the first compound may be represented by Chemical Formula 1A.

Chemical Formula 1A

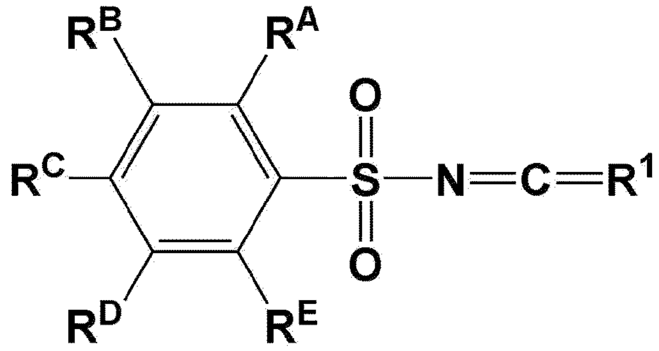

In Chemical Formula 1A, $R^A$, $R^B$, $R^C$, $R^D$, and $R^E$ are each independently hydrogen, a halogen, a hydroxyl group, a cyano group, a nitro group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, and $R^1$ is O.

For example, in Chemical Formula 1A, $R^A$, $R^B$, $R^C$, $R^D$, and $R^E$ may each independently be hydrogen, a halogen group, or a substituted or unsubstituted C1 to C10 alkyl group.

As an example, the first compound may be represented by any one selected from Chemical Formula 1A-1 to Chemical Formula 1A-3.

Chemical Formula 1A-1

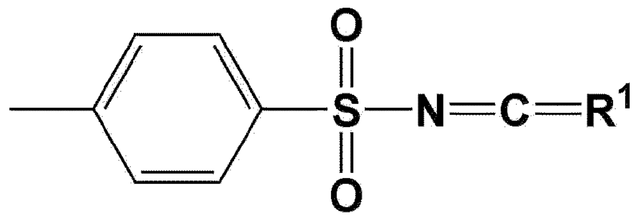

Chemical Formula 1A-2

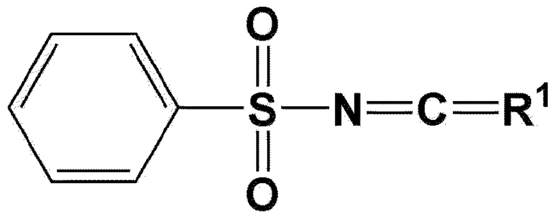

Chemical Formula 1A-3

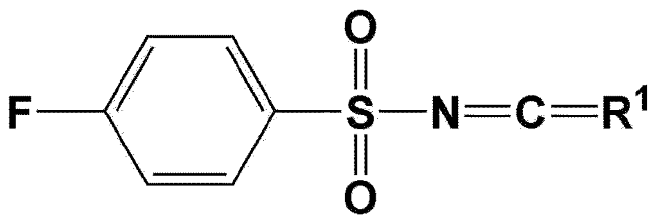

In Chemical Formula 1A-1 to Chemical Formula 1A-3, $R^1$ is O.

The first compound is included in the electrolyte solution in an amount of 0.1 wt% to 10.0 wt% based on a total weight of the electrolyte solution for a rechargeable lithium battery. For example, the first compound may be included in an

amount of 0.25 wt% to 10.0 wt%, 0.5 wt% to 10.0 wt%, 0.5 wt% to 5.0 wt%, or 0.5 wt% to 2.5 wt%, for example 0.5 wt% to 2.0 wt% based on 100 wt% of the electrolyte solution. When the first compound is included within the above range, high rate charge/discharge characteristics and swelling characteristics may be effectively improved.

## Second Compound

The second compound may be a compound including cesium hexafluorophosphate ($CsPF_6$) and/or a cesium sulfonylimide salt. The second compound is decomposed in the electrolyte solution and forms a film on the surface of an electrode to effectively control elution of lithium ions generated from the positive electrode, resulting in preventing or reducing decomposition of the electrode. In some embodiments, the second compound is earlier reduced and decomposed than the carbonate-based solvent included in the non-aqueous organic solvent and forms a SEI (Solid Electrolyte interface) film on the negative electrode to prevent or reduce decomposition of the electrolyte solution and the resulting decomposition reaction of the negative electrode, thereby suppressing or reducing internal resistance increase due to gas generation. The SEI film formed on the negative electrode is partially decomposed through a reduction reaction during the charge and discharge and then, moves onto the positive electrode surface and also forms a film on the positive electrode surface through an oxidation reaction to prevent or reduce decomposition of the positive electrode surface and an oxidation reaction of the electrolyte solution, thereby contributing to improving the high-temperature cycle-life characteristics.

The second compound is represented by Chemical Formula 2.

Chemical Formula 2

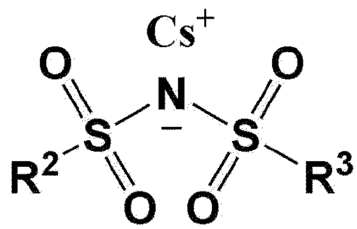

In Chemical Formula 2, $R^2$ and $R^3$ are each independently a fluorine atom, or a C1 to C4 fluoroalkyl group substituted with at least one fluorine atom.

For example, $R^2$ and $R^3$ in Chemical Formula 2 may each independently be a fluorine atom or a C1 to C4 fluoroalkyl group substituted with at least two fluorine atoms.

For example, $R^2$ and $R^3$ in Chemical Formula 2 may each independently be a fluorine atom or a C1 to C4 fluoroalkyl group substituted with at least three fluorine atoms.

As an example, $R^2$ and $R^3$ in Chemical Formula 2 may each independently be a fluorine atom or a C1 to C3 fluoroalkyl group substituted with at least three fluorine atoms.

As an example, $R^2$ and $R^3$ in Chemical Formula 2 may each independently be a fluorine atom or a C1 to C2 fluoroalkyl group substituted with at least three fluorine atoms.

For example, the compound represented by Chemical Formula 2 may be represented by Chemical Formula 2-1 or Chemical Formula 2-2.

Chemical Formula 2-1

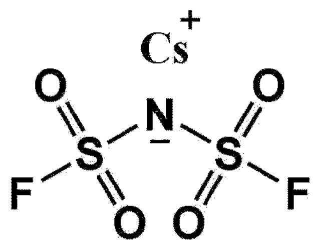

Chemical Formula 2-2

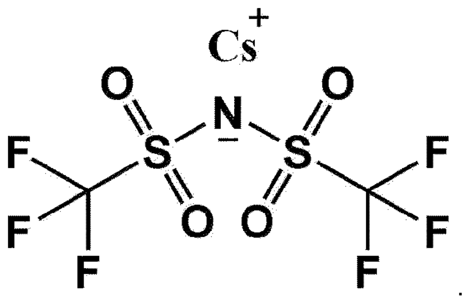

The second compound is included in the electrolyte solution in an amount of 0.01 wt% to 5 wt% based on a total weight of the electrolyte solution for a rechargeable lithium battery. For example, the second compound may be included in an amount of 0.05 wt% to 5 wt%, 0.1 wt% to 5 wt%, 0.25 wt% to 5 wt%, or 0.25 wt% to 2.5 wt%, for example 0.25 wt% to 1.25 wt% based on 100 wt% of the electrolyte solution. When the second compound is included within the above range, elution of lithium ions is effectively controlled and an increase in internal resistance due to gas generation is suppressed or reduced, thereby contributing to improvement of high-temperature cycle-life characteristics.

**Third Compound**

The additive may further include a third compound.

The third compound has a structure including a cesium fluorosulfonylimide salt, and may be decomposed in an electrolyte solution to form films on the surfaces of the positive electrode and the negative electrode, respectively. In some embodiments, the film on the surface of the positive electrode can prevent or reduce the decomposition of the positive electrode by effectively controlling the elution of lithium ions generated from the positive electrode.

In addition, the third compound is reduced and decomposed earlier than the carbonate-based solvent included in the non-aqueous organic solvent to form an SEI film on the negative electrode, thereby preventing or reducing decomposition of an electrolyte solution and the resulting decomposition reaction of the electrode, and suppressing or reducing an increase in an internal resistance due to gas generation. The SEI film formed on the negative electrode is partially decomposed through a reduction reaction during charging and discharging, moves to the surface of the positive electrode, and forms a film on the surface of the positive electrode through an oxidation reaction to prevent or reduce decomposition of the surface of the positive electrode and oxidation of the electrolyte solution, thereby improving high and low temperature cycle-life characteristics.

The third compound is represented by Chemical Formula 3.

Chemical Formula 3

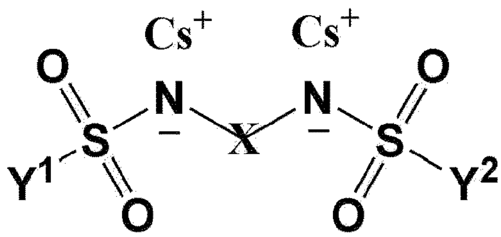

In Chemical Formula 3, X is C(=O) or $S(=O)_2$ and $Y^1$ and $Y^2$ are each independently a fluorine atom, or a C1 to C5 fluoroalkyl group substituted with at least one fluorine atom.

For example, the third compound may be represented by any one selected from Chemical Formula 3-1 to Chemical Formula 3-8.

Chemical Formula 3-1

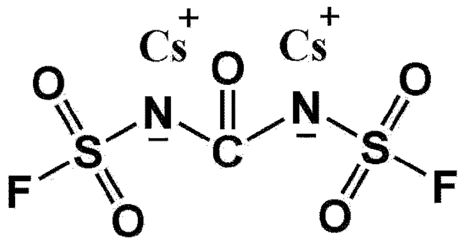

Chemical Formula 3-2

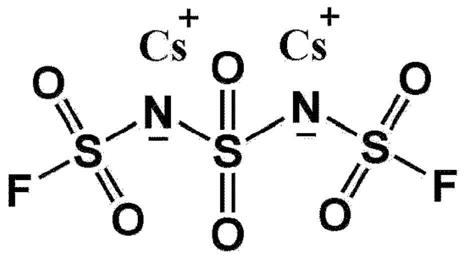

Chemical Formula 3-3

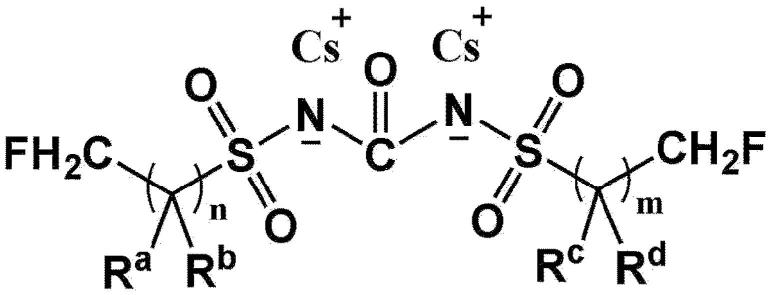

Chemical Formula 3-4

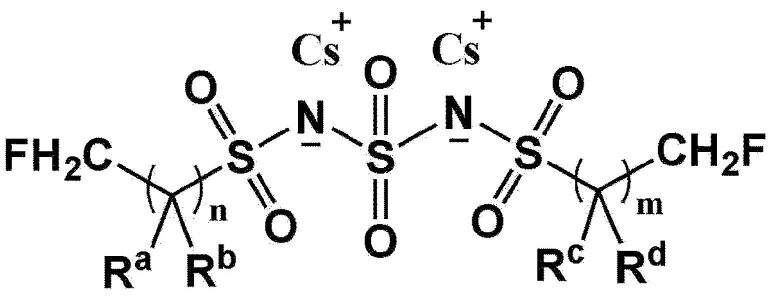

Chemical Formula 3-5

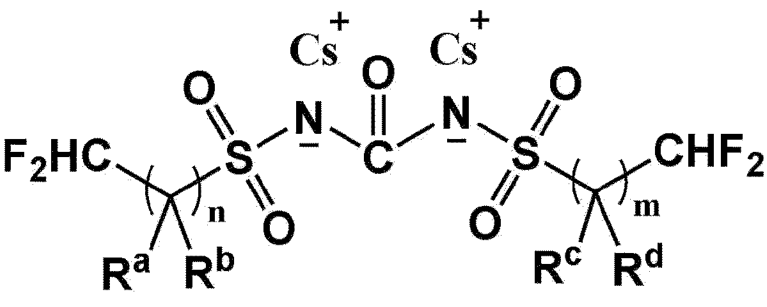

Chemical Formula 3-6

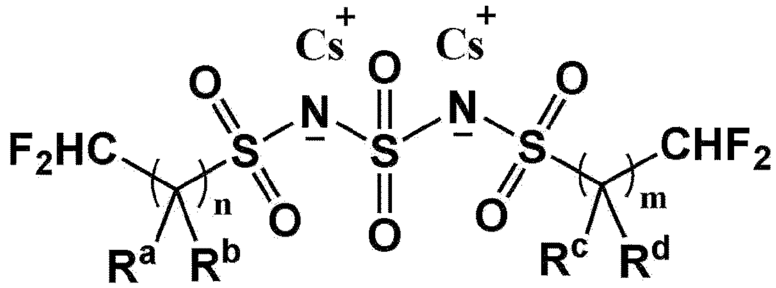

Chemical Formula 3-7

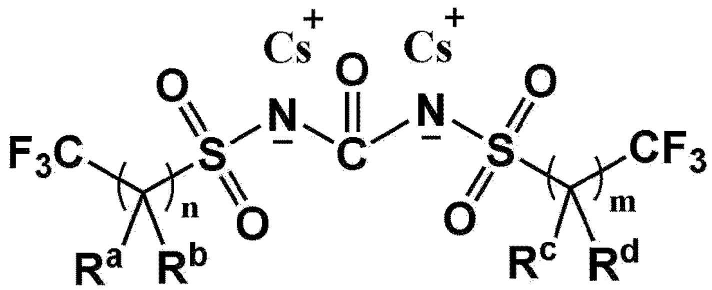

Chemical Formula 3-8

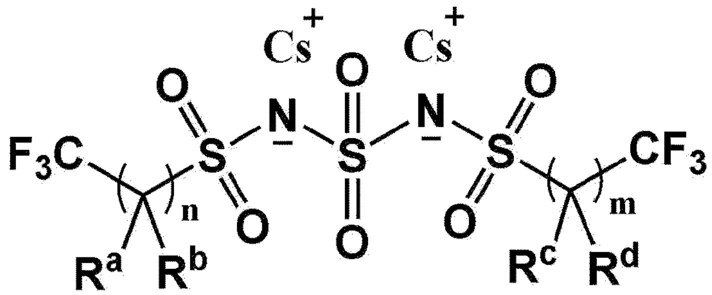

In Chemical Formula 3-3 to Chemical Formula 3-8, $R^a$, $R^b$, $R^c$, and $R^d$ are each independently hydrogen or a fluorine atom, and n and m are each independently one selected from integers of 0 to 4.

For example, the third compound may be represented by Chemical Formula 3-1 or Chemical Formula 3-2.

The third compound may be included in the electrolyte solution in an amount of 0.05 wt% to 5 wt%, for example, 0.1 wt% to 5.0 wt%, 0.2 wt% to 5.0 wt%, or 0.5 wt% to 5.0 wt%, for example 0.5 wt% to 2.5 wt% based on a total weight of the electrolyte solution for a rechargeable lithium battery. When the third compound is included within the above range, a rechargeable lithium battery having improved cycle-life characteristics and low-temperature output characteristics may be implemented by preventing or reducing resistance increase during long-term charge/discharge or at low temperatures.

**Other Additives**

The electrolyte solution for a rechargeable lithium battery may further include other additives other than those described above. When the other additives are further included, high-temperature storage characteristics may be improved, such as effectively controlling gas generated from the positive electrode and the negative electrode during high-temperature storage.

The other additives may include at least one selected from vinylene carbonate (VC), fluoroethylene carbonate (FEC), difluoroethylene carbonate (DFEC), chloroethylene carbonate (CEC), dichloroethylene carbonate (DCEC), bromoethylene carbonate (BEC), dibromoethylene carbonate (DBEC), nitroethylene carbonate, cyanoethylene carbonate, vinylethylene carbonate (VEC), succinonitrile (SN), adiponitrile (AN), 1,3,6-hexane tricyanide (HTCN), propenesultone (PST), propanesultone (PS), lithiumtetrafluoroborate ($LiBF_4$), lithium difluorophosphate ($LiPO_2F_2$), and 2-fluoro biphenyl (2-FBP), but are not limited thereto.

The other additives may be included in the electrolyte solution in an amount of 0.2 wt% to 30 wt% based on a total

weight of the electrolyte solution for a rechargeable lithium battery. For example, the other additives may be included in an amount of 0.2 wt% to 15 wt%, for example 0.2 wt% to 10 wt%. When the other additives are included within the above range, a rechargeable lithium battery having improved high-temperature storage characteristics such as effectively controlling gas generated from the positive electrode and the negative electrode may be implemented.

### Electrolyte Solution

The electrolyte solution for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond, and the like; amides such as dimethylformamide; dioxolanes such as 1,3-dioxolane, 1,4-dioxolane, and the like; sulfolanes, and the like.

The non-aqueous organic solvents may be used alone or in combination of two or more.

In addition, when using a carbonate-based solvent, a cyclic carbonate and a chain carbonate may be mixed and used, and the cyclic carbonate and the chain carbonate may be mixed in a volume ratio of 1:1 to 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

### Rechargeable Lithium Battery

An embodiment provides a rechargeable lithium battery including a positive electrode including a positive electrode active material, a negative electrode including a negative electrode active material, a separator between the positive electrode and the positive electrode, and the aforementioned electrolyte solution.

The rechargeable lithium battery may be classified into cylindrical, prismatic, pouch, or coin-type batteries, and the like depending on their shape. FIGS. 1 to 4 are schematic views illustrating a rechargeable lithium battery according to an embodiment. FIG. 1 shows a cylindrical battery, FIG. 2 shows a prismatic battery, and FIGS. 3 and 4 show pouch-type batteries. Referring to FIGS. 1 to 4, the rechargeable lithium battery 100 may include an electrode assembly 40 including a separator 30 between a positive electrode 10 and a negative electrode 20, and a case in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 1. In FIG. 2, the rechargeable lithium battery 100 may include a positive lead tab 11, a positive terminal 12, a negative lead tab 21, and a negative terminal 22. As shown in FIGS. 3 and 4, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The rechargeable lithium battery according to an embodiment may be applied to automobiles, mobile phones, and/or various types of electric devices, as non-limiting examples.

### Positive Electrode Active Material

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. $Li_aA_{1-b}X_bO_{2-c}D_c$ ($0.90\leq a\leq 1.8$, $0\leq b\leq 0.5$, and $0\leq c\leq 0.05$); $Li_aMn_{2-b}X_bO_{4-c}D_c$ ($0.90\leq a\leq 1.8, 0\leq b\leq 0.5$, and $0\leq c\leq 0.05$); $Li_aNi_{1-b-c}Co_bX_cO_{2-\alpha}D_\alpha$ ($0.90\leq a\leq 1.8, 0\leq b\leq 0.5$, $0\leq c\leq 0.5$, and $0<\alpha<2$); $Li_aNi_{1-b-c}Mn_bX_cO_{2-\alpha}D_\alpha$ ($0.90\leq a\leq 1.8, 0\leq b\leq 0.5$, $0\leq c\leq 0.5$, and $0<\alpha<2$); $Li_aNi_bCo_cL^1{}_dGeO_2$ ($0.90\leq a\leq 1.8, 0\leq b\leq 0.9$, $0\leq c\leq 0.5$, $0\leq d\leq 0.5$, and $0\leq e\leq 0.1$); $Li_aNiG_bO_2$ ($0.90\leq a\leq 1.8$ and $0.001\leq b\leq 0.1$); $Li_aCoG_bO_2$ ($0.90\leq a\leq 1.8$ and $0.001\leq b\leq 0.1$); $Li_aMn_{1-b}G_bO_2$ ($0.90\leq a\leq 1.8$ and $0.001\leq b\leq 0.1$); $Li_aMn_2G_bO_4$ ($0.90\leq a\leq 1.8$ and $0.001\leq b\leq 0.1$); $Li_aMn_{1-g}G_gPO_4$ ($0.90\leq a\leq 1.8$ and $0\leq g\leq 0.5$); $Li_{(3-f)}Fe_2(PO_4)_3$($0\leq f\leq 2$); or $Li_aFePO_4$($0.90\leq a\leq 1.8$).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and $L^1$ is Mn, Al, or a combination thereof.

The positive electrode active material may be, for example, a high nickel-based positive electrode active material having a nickel content of greater than or equal to 80 mol%, greater than or equal to 85 mol%, greater than or equal to 90 mol%, greater than or equal to 91 mol%, or greater than or equal to 94 mol% and less than or equal to 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

In an embodiment, the positive electrode active material may include a lithium cobalt-based oxide. A positive electrode using lithium cobalt-based oxide as a positive electrode active material can suppress or reduce battery resistance and improve overall battery performance by exhibiting a synergistic effect in a 4.5 V-class high voltage design or rapid charging system when used with the aforementioned electrolyte solution.

The lithium cobalt-based oxide may be for example represented by Chemical Formula 4.

Chemical Formula 4 $$Li_{a1}CO_{x1}M^1{}_{(1-x1)}O_2$$

In Chemical Formula 4, $0.9\leq a1\leq 1.8$, and $0.7\leq x1\leq 1$, and $M^1$ is one or more elements selected from Al, B, Ba, Ca, Ce, Cr, Cu, F, Fe, Mg, Mn, Mo, Ni, P, S, Se, Si, Sr, Ti, V, W, Y, Zn and Zr.

In Chemical Formula 4, x1 represents a mole content of cobalt and may be, for example, $0.8\leq x1\leq 1$, $0.9\leq x1\leq 1$, or $0.95\leq x1\leq 1$.

**Positive Electrode**

A positive electrode for a rechargeable lithium battery may include a current collector and a positive electrode active material layer on the current collector. The positive electrode active material layer may include a positive electrode active material and may further include a binder and/or a conductive material (e.g., an electrically conductive material).

For example, the positive electrode may further include an additive that can serve as a sacrificial positive electrode.

An amount of the positive electrode active material may be 90 wt% to 99.5 wt% based on 100 wt% of the positive electrode active material layer. Amounts of the binder and the conductive material may be 0.5 wt% to 5 wt%, respectively, based on 100 wt% of the positive electrode active material layer.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

Al may be used as the current collector, but is not limited thereto.

## Negative Electrode Active Material

The negative electrode active material may include a material that reversibly intercalates/deintercalates lithium ions, a lithium metal, a lithium metal alloy, a material capable of doping/dedoping lithium, or a transition metal oxide.
The material that reversibly intercalates/deintercalates lithium ions may include a carbon-based negative electrode active material, such as, for example. crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.
The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.
The material capable of doping/dedoping lithium may be a Si-based negative electrode active material or a Sn-based negative electrode active material. The Si-based negative electrode active material may include silicon, a silicon-carbon composite, SiOx ($0 < x < 2$), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, $SnO_2$, a Sn-based alloy, or a combination thereof.
The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.
The silicon-carbon composite may further include crystalline carbon. For example, the silicon-carbon composite may include a core including crystalline carbon and silicon particles and an amorphous carbon coating layer on a surface of the core.
The Si-based negative electrode active material or the Sn-based negative electrode active material may be used in combination with a carbon-based negative electrode active material.

## Negative Electrode

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).
For example, the negative electrode active material layer may include 90 wt% to 99 wt% of the negative electrode active material, 0.5 wt% to 5 wt% of the binder, and 0 wt% to 5 wt% of the conductive material.
The binder may serve to attach the negative electrode active material well particles to each other and also to attach the negative electrode active material well to the current collector. The binder may include a non-aqueous binder, an aqueous binder, a dry binder, or a combination thereof.
The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.
The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.
When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.
The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.
The conductive material may be used to impart conductivity (e.g., electrical conductivity) to the electrode. Any material that does not cause chemical change (e.g., does not cause an undesirable chemical change in the rechargeable lithium battery) and that conducts electrons can be used in the battery. Non-limiting examples thereof may include a carbon-based material such as natural graphite, artificial graphite, carbon black, acetylene black, ketjen black, a carbon

fiber, a carbon nanofiber, and a carbon nanotube; a metal-based material including copper, nickel, aluminum, silver, etc. in a form of a metal powder or a metal fiber; a conductive polymer such as a polyphenylene derivative; or a mixture thereof.

The negative current collector may include a copper foil, a nickel foil, a stainless steel foil, a titanium foil, a nickel foam, a copper foam, a polymer substrate coated with a conductive metal, or a combination thereof.

**Separator**

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

The following Examples and Comparative Examples are provided in order to highlight characteristics of one or more embodiments, but it will be understood that the Examples and Comparative Examples are not to be construed as limiting the scope of the embodiments, nor are the Comparative Examples to be construed as being outside the scope of the embodiments. Further, it will be understood that the embodiments are not limited to the particular details described in the Examples and Comparative Examples.

**Example 1**

**1. Preparation of Electrolyte Solution**

After preparing a non-aqueous organic solvent by sequentially mixing together ethylene carbonate (EC), propylene carbonate (PC), ethyl propionate (EP), and propyl propionate (PP) in a volume ratio of 10:15:30:45, 1.3 M of a lithium salt $LiPF_6$ is dissolved therein, thereby preparing a basic electrolyte solution.

To the basic electrolyte solution, a first compound represented by Chemical Formula 1A-1a and a second compound represented by Chemical Formula 2-1 are added, thereby preparing an electrolyte solution according to Example 1. Herein, 1 wt% of the first compound and 0.5 wt% of the second compound are added to a total amount of the electrolyte solution.

Chemical Formula 1A-1a

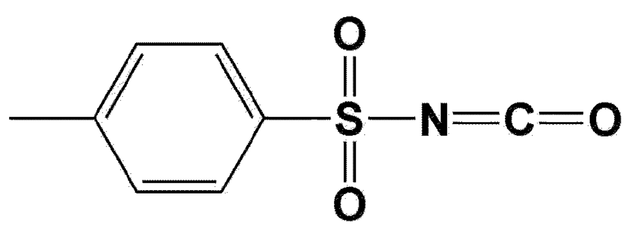

Chemical Formula 2-1

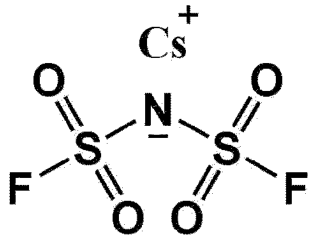

## 2. Manufacturing of Rechargeable Lithium Battery Cell

$LiCoO_2$ as a positive electrode active material, polyvinylidene fluoride as a binder, and ketjen black as a conductive material are mixed together in a weight ratio of 97:2:1 and then, dispersed in N-methyl pyrrolidone, thereby preparing a positive electrode active material slurry. The positive electrode active material slurry is coated in a 14 μm-thick Al foil current collector, dried at 110 °C, and compressed, thereby manufacturing a positive electrode.

In addition, a negative electrode active material slurry is prepared by mixing together artificial graphite as a negative electrode active material, styrene-butadiene rubber as a binder, and carboxylmethyl cellulose as a thickener in a weight ratio of 97:1:2 and dispersing the mixture in distilled water. The negative electrode active material slurry is coated on a 10 μm-thick Cu foil current collector, dried at 100 °C, and compressed, thereby manufacturing a negative electrode.

Between the positive electrode and the negative electrode, a 25 μm-thick separation membrane having a polyethylene-polypropylene multi-layer structure is interposed to manufacture an electrode assembly, and a 4.5 V-class rechargeable lithium battery cell is manufactured by inserting the electrode assembly into a pouch-type battery case and injecting the prepared electrolyte solution thereinto.

The manufactured rechargeable lithium battery cell has a total thickness of about 50 μm.

### Examples 2 to 3 and Comparative Examples 1 to 7

Each electrolyte solution and each rechargeable lithium battery cell are prepared in substantially the same manner as in Example 1 except that the electrolyte solution is prepared by changing the contents of the first compound and the second compound and the content ratio are changed as shown in Table 1.

Table 1

| | First compound (wt%) | Second compound (wt%) | First compound: Second compound (weight ratio) |
|---|---|---|---|
| Example 1 | 1 | 0.5 | 1 : 0.5 |
| Example 2 | 1 | 1.0 | 1 : 1 |
| Example 3 | 1 | 1.25 | 1 : 1.25 |
| Comparative Example 1 | 0 | 0 | 0:0 |
| Comparative Example 2 | 1 | 0 | 1 : 0 |
| Comparative Example 3 | 0 | 0.5 | 0 : 0.5 |
| Comparative Example 4 | 1 | 1.5 | 1 : 1.5 |
| Comparative Example 5 | 1 | 0.25 | 1 : 0.25 |
| Comparative Example 6 | 3 | 0.5 | 1 : 0.16 |
| Comparative Example 7 | 5 | 0.5 | 1 : 0.1 |

### Evaluation Example 1: Evaluation of Battery Cell Thickness Increase Rate after Charge/discharge Cycle

The rechargeable lithium battery cells according to Examples 1 to 3 and Comparative Examples 1 to 7 are charged to an upper limit of 4.5 V under a constant current condition of 0.2 C, paused for 10 minutes, and discharged to 3.0 V under a condition of 0.2 C at 25 °C, which is performed as initial charge and discharge. Subsequently, the cells are 200 times repeatedly charged and discharged at 1.5 C/1.0 C within a range of 3.0 V to 4.5 V at 45 °C.

Herein, each battery cell is measured with respect to a thickness immediately after the manufacturing and a thickness after the 200 cycles, which are used to calculate a battery thickness increase rate during the cycle-life according to Equation 1, and the results are shown in Table 2.

A thickness of Example 1 immediately after the initial charge and discharge is 50 μm, and a battery thickness thereof after the 200 cycles is 52.8 μm.

{(Battery cell thickness after 200 cycles) - (Thickness immediately after initial charge/discharge)}/(Thickness immediately after initial charge/discharge) x 100 Equation 1

**Evaluation Example 2: Evaluation of High-temperature Cycle-life Characteristics**

The rechargeable lithium battery cells according to Examples 1 to 3 and Comparative Examples 1 to 7 are initially charged and discharged and then, 200 cycles charged and discharged in substantially the same manner as in Evaluation Example 1. A ratio of discharge capacity at the 200$^{th}$ cycle to initial discharge capacity is calculated and then, provided as high temperature capacity retention in Table 2.

**Evaluation Example 3: Evaluation of High-temperature Storage Characteristics**

The rechargeable lithium battery cells according to Example 1 to 3 and Comparative Example 1 to 7 are measured with respect to △V/△I (voltage change/current change) as initial DC resistance (DCIR) and also, measured with respect to DC resistance after being fully charged (SOC 100%) as a maximum energy state and stored at a high temperature (60 °C) for 28 days, which are used to calculate a DCIR increase rate (%) according to Equation 2, and the results are shown in Table 2.

Equation 2

$$\text{DCIR increase rate} = (\text{DCIR after 28 days} / \text{Initial DCIR}) \times 100\%$$

Table 2

| | Weight ratio of the first compound to the second compound | Thickness increase rate after charge/dis charge cycle (%) | High-temperat ure capacity retention (%) | DCIR increase rate after high temperatur e storage (%) |
|---|---|---|---|---|
| Example 1 | 1:0.5 | 5.6 | 95.0 | 122 |
| Example 2 | 1:1.0 | 7.1 | 92.5 | 126 |
| Example 3 | 1:1.25 | 7.9 | 91.0 | 129 |
| Comparative Example 1 | 0:0 | 16.7 | 83.0 | 152 |
| Comparative Example 2 | 1:0 | 16.0 | 86.0 | 147 |
| Comparative Example 3 | 0:0.5 | 14.2 | 85.2 | 136.5 |
| Comparative Example 4 | 1:1.5 | 9.8 | 88.2 | 133 |
| Comparative Example 5 | 1:0.25 | 13.0 | 88.0 | 134 |
| Comparative Example 6 | 1:0.16 | 16.9 | 83.0 | 149 |
| Comparative Example 7 | 1:0.1 | 17.2 | 81.0 | 160 |

Referring to Table 2, Comparative Example 1 including no first and second compounds and Comparative Example 2 and 3 using either one selected from the first and second compounds exhibit a thickness increase rate of greater than 10% and inferior high-temperature cycle-life characteristics and high-temperature storage characteristics

Comparative Example 4 having greater than 1.3 of a ratio of the second compound to the first compound exhibits a higher thickness increase rate after the charge/discharge cycles compared to the Examples, and exhibits inferior high-temperature cycle-life characteristics and high-temperature storage characteristics to the examples. Comparative Examples 5 to 7 having a ratio of the second compound to the first compound of less than 1.3 exhibit almost no or

insignificant battery thickness increase rate after the charge/discharge cycles and thus unsatisfactory high-temperature cycle-life characteristics and high-temperature storage characteristics. On the contrary, the examples having a weight ratio of the first and second compounds within a range of 1:0.3 to 1:1.3 exhibit a thickness increase rate of about 8% after the charge/discharge cycles, improved high temperature capacity retention of about 90%, and a reduced resistance increase rate of 130% after the high-temperature storage, compared with the comparative examples. According to one embodiment, an electrolyte solution prepared by applying two types (or kinds) of additives in a set ratio may be applied to improve high-temperature cycle-life characteristics and effectively suppress or reduce resistance increase during the high-temperature storage at the same time during the rapid charge at a high voltage of 4.5 V.

**Description of Symbols**

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

**1.** An electrolyte solution for a rechargeable lithium battery (100), comprising:

a non-aqueous organic solvent, a lithium salt, and an additive,
**characterized in that** the additive comprises a first compound represented by Chemical Formula 1 and a second compound that is $CsPF_6$ or a compound represented by Chemical Formula 2,
a weight ratio of the first compound to the second compound is 1: 0.3 to 1: 1.3,
the first compound is included in the electrolyte solution in an amount of 0.1 wt% to 10.0 wt% based on a total weight of the electrolyte solution for a rechargeable lithium battery, and,
the second compound is included in the electrolyte solution in an amount of 0.01 wt% to 5 wt% based on a total weight of the electrolyte solution for a rechargeable lithium battery:

Chemical Formula 1

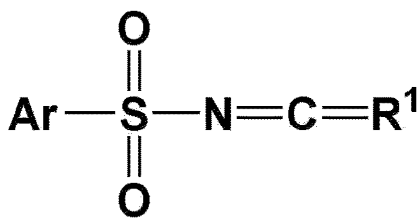

wherein, in Chemical Formula 1,

Ar is a substituted or unsubstituted C6 to C30 aryl group, or a substituted or unsubstituted C2 to C30 heterocyclic group, and
R' is O,

Chemical Formula 2

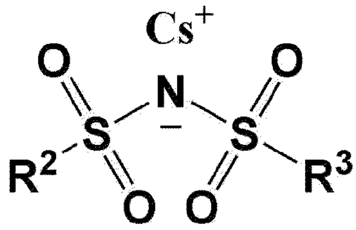

wherein, in Chemical Formula 2,

$R^2$ and $R^3$ are each independently a fluorine atom, or a C1 to C4 fluoroalkyl group substituted with at least one fluorine atom,
wherein the term "substituted" refers to replacement of at least one hydrogen of a substituent or a compound by deuterium, a halogen, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group, or a combination thereof.

**2.** The electrolyte solution of claim 1, wherein:
the weight ratio of the first compound to the second compound is 1 : 0.5 to 1 : 1.25.

**3.** The electrolyte solution of claim 1 or 2, wherein:
the first compound is included in the electrolyte solution in an amount of 0.5 wt% to 2.0 wt% based on a total weight of the electrolyte solution for a rechargeable lithium battery.

**4.** The electrolyte solution of any one of the preceding claims, wherein:
the second compound is included in the electrolyte solution in an amount of 0.25 wt% to 1.25 wt% based on a total weight of the electrolyte solution for a rechargeable lithium battery.

**5.** The electrolyte solution of any one of the preceding claims, wherein:
the first compound is represented by Chemical Formula 1A:

Chemical Formula 1A

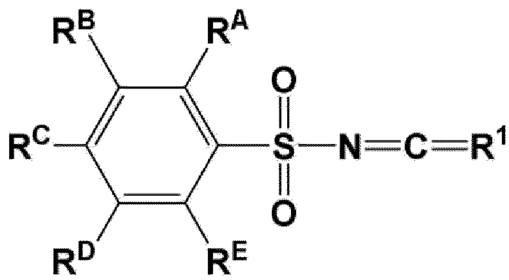

wherein, in Chemical Formula 1A,

$R^A$, $R^B$, $R^C$, $R^D$, and $R^E$ are each independently hydrogen, a halogen, a hydroxyl group, a cyano group, a nitro group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, and
R' is O,
wherein the term "substituted" refers to replacement of at least one hydrogen of a substituent or a compound by deuterium, a halogen, a hydroxyl group, an amino group, a C1 to C30 amine group, a nitro group, a C1 to C40 silyl

group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group.

**6.** The electrolyte solution of claim 5, wherein:
in Chemical Formula 1A, $R^A$, $R^B$, $R^C$, $R^D$, and $R^E$ are each independently hydrogen, a halogen, or a substituted or unsubstituted C1 to C10 alkyl group.

**7.** The electrolyte solution of any one of the preceding claims, wherein:
the first compound is represented by any one selected from Chemical Formula 1A-1 to Chemical Formula 1A-3:

Chemical Formula 1A-1

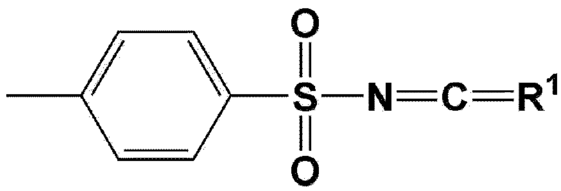

Chemical Formula 1A-2

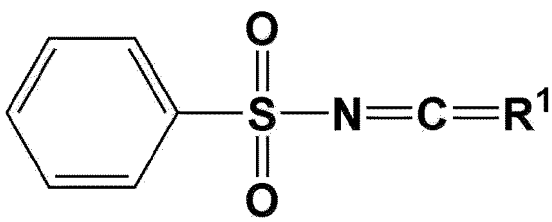

Chemical Formula 1A-3

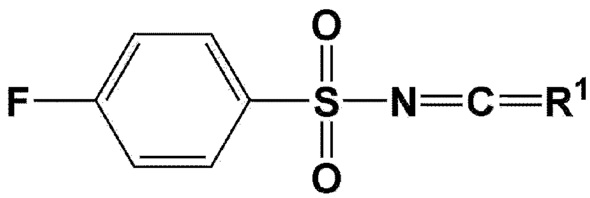

wherein, in Chemical Formula 1A-1 to Chemical Formula 1A-3,
R’ is O.

**8.** The electrolyte solution of any one of the preceding claims, wherein:
the compound represented by Chemical Formula 2 is represented by Chemical Formula 2-1 or Chemical Formula 2-2:

Chemical Formula 2-1

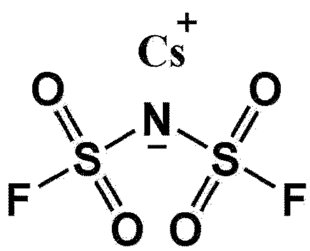

Chemical Formula 2-2

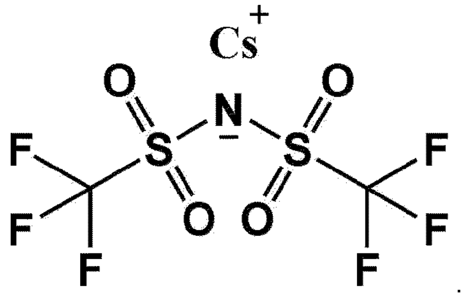

**9.** The electrolyte solution of any one of the preceding claims, wherein:

the additive further comprises a third compound represented by Chemical Formula 3:

Chemical Formula 3

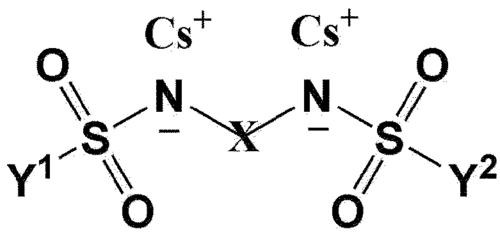

wherein, in Chemical Formula 3, X is C(=O) or $S(=O)_2$, and
$Y^1$ and $Y^2$ are each independently a fluorine atom or a C1 to C5 fluoroalkyl group substituted with at least one fluorine atom.

**10.** The electrolyte solution of claim 9, wherein:
the third compound is represented by any one selected from Chemical Formula 3-1 to Chemical Formula 3-8:

Chemical Formula 3-1

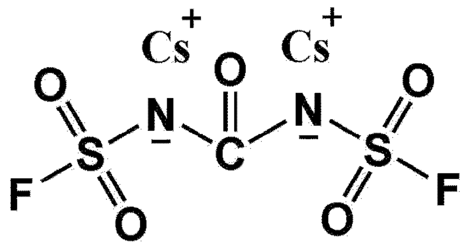

Chemical Formula 3-2

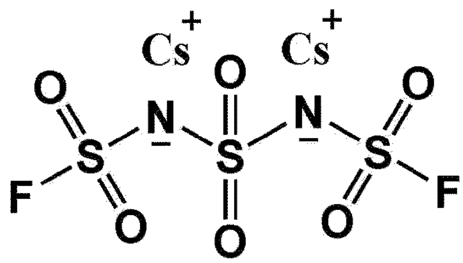

Chemical Formula 3-3

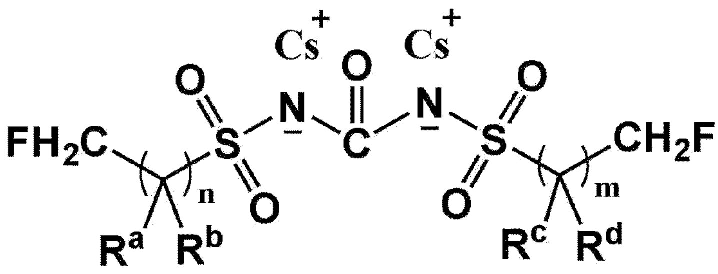

Chemical Formula 3-4

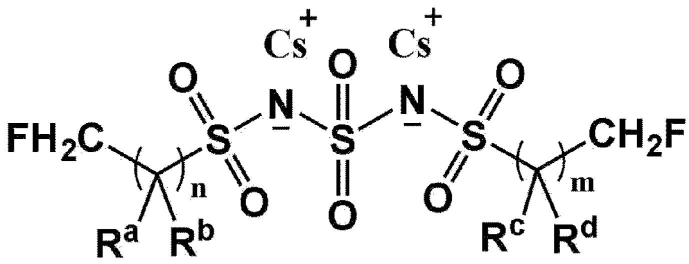

Chemical Formula 3-5

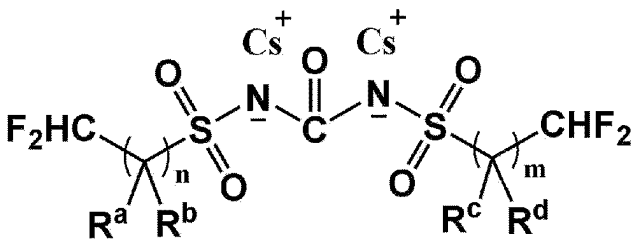

Chemical Formula 3-6

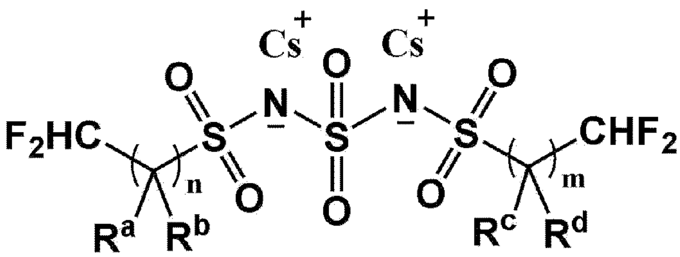

Chemical Formula 3-7

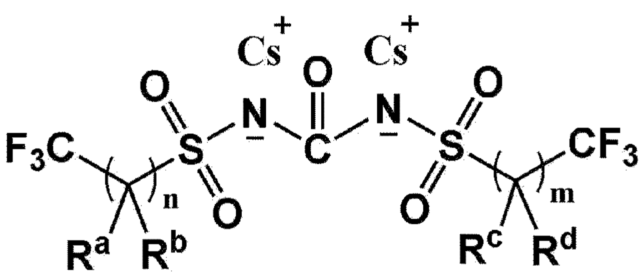

Chemical Formula 3-8

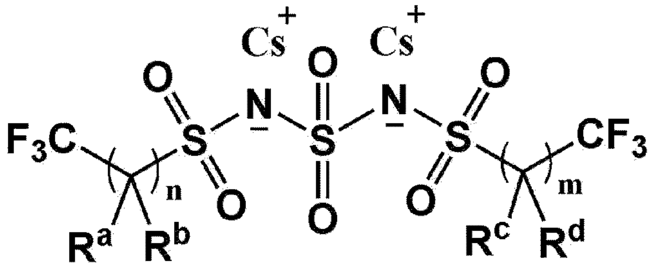

wherein, in Chemical Formula 3-3 to Chemical Formula 3-8,

$R^a$, $R^b$, $R^c$, and $R^d$ are each independently hydrogen or a fluorine atom, and
n and m are each independently one selected from integers of 0 to 4.

**11.** The electrolyte solution of any one of the preceding claims, wherein:

the electrolyte solution for a rechargeable lithium battery further comprises other additives, and
the other additives comprise at least one selected from vinylene carbonate (VC), fluoroethylene carbonate (FEC), difluoroethylene carbonate (DFEC), chloroethylene carbonate (CEC), dichloroethylene carbonate (DCEC), bromoethylene carbonate(BEC), dibromoethylene carbonate (DBEC), nitroethylene carbonate, cyanoethylene carbonate, vinylethylene carbonate (VEC), succinonitrile (SN), adiponitrile(AN), 1,3,6-hexane tricyanide (HTCN), propenesultone (PST), propanesultone (PS), lithiumtetrafluoroborate ($LiBF_4$), lithium difluorophosphate ($LiPO_2F_2$), and 2-fluoro biphenyl (2-FBP).

**12.** A rechargeable lithium battery (100), comprising:

a positive electrode (10) comprising a positive electrode active material;
a negative electrode (20) comprising a negative electrode active material;
a separator between the positive electrode (10) and the negative electrode (20); and
the electrolyte solution of claim 1.

**13.** The rechargeable lithium battery of claim 12, wherein:
the positive electrode active material comprises a lithium cobalt-based oxide.

**14.** The rechargeable lithium battery of claim 13, wherein:

the lithium cobalt-based oxide is represented by Chemical Formula 4:

Chemical Formula 4 $Li_{a1}CO_{x1}M^1_{(1-x1)}O_2$

wherein, in Chemical Formula 4, $0.9 \leq a1 \leq 1.8$, $0.7 \leq x1 \leq 1$, and $M^1$ is one or more elements selected from Al, B, Ba, Ca, Ce, Cr, Cu, F, Fe, Mg, Mn, Mo, Ni, P, S, Se, Si, Sr, Ti, V, W, Y, Zn and Zr.

**15.** The rechargeable lithium battery of claim 12, wherein:
the negative electrode active material comprises crystalline carbon.

## Patentansprüche

**1.** Elektrolytlösung für eine wiederaufladbare Lithiumbatterie (100), umfassend:

ein nichtwässriges organisches Lösungsmittel, ein Lithiumsalz und einen Zusatzstoff,
**dadurch gekennzeichnet, dass** der Zusatzstoff eine durch die chemische Formel 1 dargestellte erste Verbindung und eine zweite Verbindung, die $CsPF_6$ oder eine durch die chemische Formel 2 dargestellte Verbindung ist, umfasst,

wobei das Gewichtsverhältnis der ersten Verbindung zur zweiten Verbindung 1:0,3 bis 1: 1,3 beträgt, die erste Verbindung in einer Menge von 0,1 Gew.-% bis 10,0 Gew.-%, bezogen auf das Gesamtgewicht der Elektrolytlösung für eine wiederaufladbare Lithiumbatterie, in der Elektrolytlösung enthalten ist und die zweite Verbindung in einer Menge von 0,01 Gew.-% bis 5 Gew.-%, bezogen auf das Gesamtgewicht der Elektrolytlösung für eine wiederaufladbare Lithiumbatterie, in der Elektrolytlösung enthalten ist:

Chemische Formel 1

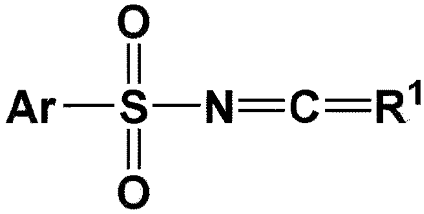

wobei in der chemischen Formel 1

Ar eine substituierte oder unsubstituierte C6- bis C30-Arylgruppe oder eine substituierte oder unsubstituierte C2- bis C30-heterocyclische Gruppe ist und
$R^1$ O ist,

Chemische Formel 2

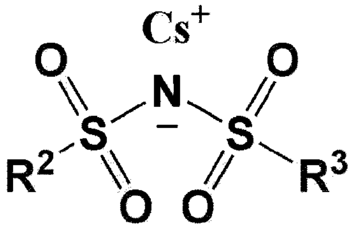

wobei in der chemischen Formel 2

$R^2$ und $R^3$ jeweils unabhängig voneinander ein Fluoratom oder eine C1- bis C4-Fluoralkylgruppe sind, die mit mindestens einem Fluoratom substituiert ist,
wobei der Begriff "substituiert" den Ersatz mindestens eines Wasserstoffatoms eines Substituenten oder einer Verbindung durch Deuterium, ein Halogen, eine Hydroxylgruppe, eine Aminogruppe, eine C1- bis C30-Amingruppe, eine Nitrogruppe, eine C1- bis C40-Silylgruppe, eine C1- bis C30-Alkylgruppe, eine C1- bis C10-Alkylsilylgruppe, eine C6- bis C30-Arylsilylgruppe, eine C3- bis C30-Cycloalkylgruppe, eine C3- bis C30-Heterocycloalkylgruppe, eine C6- bis C30-Arylgruppe, eine C2- bis C30-Heteroarylgruppe, eine C1- bis C20-Alkoxygruppe, eine C1- bis C10-Fluoralkylgruppe, eine Cyanogruppe oder eine Kombination davon bezeichnet.

**2.** Elektrolytlösung nach Anspruch 1, wobei:
das Gewichtsverhältnis der ersten Verbindung zur zweiten Verbindung 1 : 0,5 bis 1 : 1,25 beträgt.

**3.** Elektrolytlösung nach Anspruch 1 oder 2, wobei:
die erste Verbindung in einer Menge von 0,5 Gew.-% bis 2,0 Gew.-%, bezogen auf das Gesamtgewicht der Elektrolytlösung für eine wiederaufladbare Lithiumbatterie, in der Elektrolytlösung enthalten ist.

**4.** Elektrolytlösung nach einem der vorstehenden Ansprüche, wobei:
die zweite Verbindung in einer Menge von 0,25 Gew.-% bis 1,25 Gew.-%, bezogen auf das Gesamtgewicht der Elektrolytlösung für eine wiederaufladbare Lithiumbatterie, in der Elektrolytlösung enthalten ist.

**5.** Elektrolytlösung nach einem der vorstehenden Ansprüche, wobei:
die erste Verbindung durch die chemische Formel 1A dargestellt ist:

Chemische Formel 1A

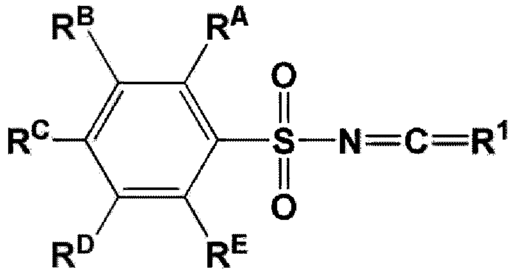

wobei in der chemischen Formel 1A

$R^A$, $R^B$, $R^C$, $R^D$ und $R^E$ jeweils unabhängig voneinander Wasserstoff, ein Halogen, eine Hydroxylgruppe, eine Cyanogruppe, eine Nitrogruppe, eine substituierte oder unsubstituierte C1- bis C20-Alkylgruppe, eine substituierte oder unsubstituierte C1- bis C20-Alkoxygruppe, eine substituierte oder unsubstituierte C2- bis C20-Alkenylgruppe, eine substituierte oder unsubstituierte C2- bis C20-Alkinylgruppe, eine substituierte oder unsubstituierte C3- bis C20-Cycloalkylgruppe, eine substituierte oder unsubstituierte C6- bis C20-Arylgruppe oder eine substituierte oder unsubstituierte C2- bis C20-Heteroarylgruppe sind und

$R^1$ O ist,

wobei der Begriff "substituiert" den Ersatz mindestens eines Wasserstoffatoms eines Substituenten oder einer Verbindung durch Deuterium, ein Halogen, eine Hydroxylgruppe, eine Aminogruppe, eine C1- bis C30-Amingruppe, eine Nitrogruppe, eine C1- bis C40-Silylgruppe, eine C1- bis C30-Alkylgruppe, eine C1- bis C10-Alkylsilylgruppe, eine C6- bis C30-Arylsilylgruppe, eine C3- bis C30-Cycloalkylgruppe, eine C3- bis C30-Heterocycloalkylgruppe, eine C6- bis C30-Arylgruppe, eine C2- bis C30-Heteroarylgruppe, eine C1- bis C20-Alkoxygruppe, eine C1- bis C10-Fluoralkylgruppe, eine Cyanogruppe bezeichnet.

**6.** Elektrolytlösung nach Anspruch 5, wobei:
in der chemischen Formel 1A $R^A$, $R^B$, $R^C$, $R^D$ und $R^E$ jeweils unabhängig voneinander Wasserstoff, ein Halogen oder eine substituierte oder unsubstituierte C1- bis C10-Alkylgruppe sind.

**7.** Elektrolytlösung nach einem der vorstehenden Ansprüche, wobei:
die erste Verbindung durch eine beliebige aus der chemischen Formel 1A-1 bis zur chemischen Formel 1A-3 ausgewählte chemische Formel dargestellt ist:

Chemische Formel 1A-1

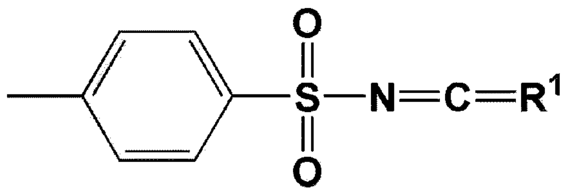

Chemische Formel 1A-2

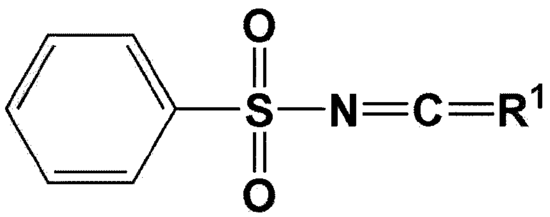

Chemische Formel 1A-3

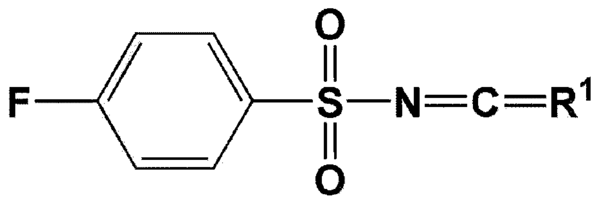

wobei in der chemischen Formel 1A-1 bis zur chemischen Formel 1A-3 $R^1$ O ist.

**8.** Elektrolytlösung nach einem der vorstehenden Ansprüche, wobei: die durch die chemische Formel 2 dargestellte Verbindung durch die chemische Formel 2-1 oder die chemische Formel 2-2 dargestellt ist:

Chemische Formel 2-1

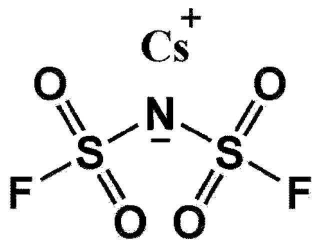

Chemische Formel 2-2

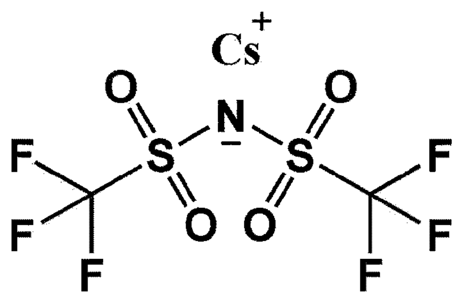

**9.** Elektrolytlösung nach einem der vorstehenden Ansprüche, wobei: der Zusatzstoff ferner eine dritte Verbindung umfasst, die durch die chemische Formel 3 dargestellt ist:

Chemische Formel 3

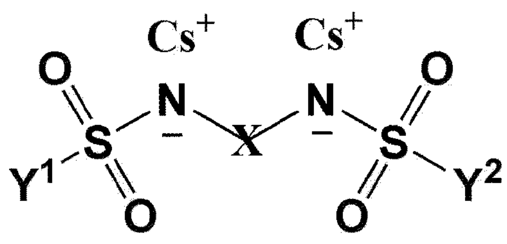

wobei in der chemischen Formel 3 X C(=O) oder $S(=O)_2$ ist und $Y^1$ und $Y^2$ jeweils unabhängig voneinander ein Fluoratom oder eine C1- bis C5-Fluoralkylgruppe sind, die mit mindestens einem Fluoratom substituiert ist.

**10.** Elektrolytlösung nach Anspruch 9, wobei:

die dritte Verbindung durch eine beliebige aus der chemischen Formel 3-1 bis zur chemischen Formel 3-8 ausgewählte chemische Formel dargestellt ist:

Chemische Formel 3-1

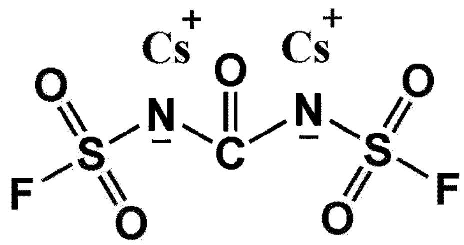

Chemische Formel 3-2

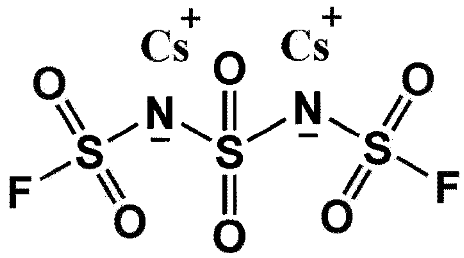

Chemische Formel 3-3

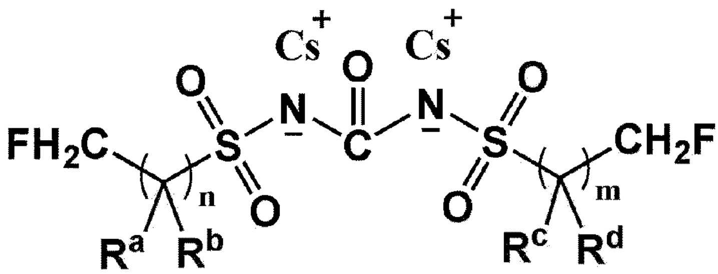

Chemische Formel 3-4

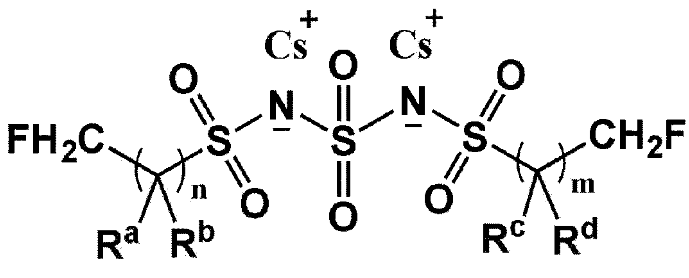

Chemische Formel 3-5

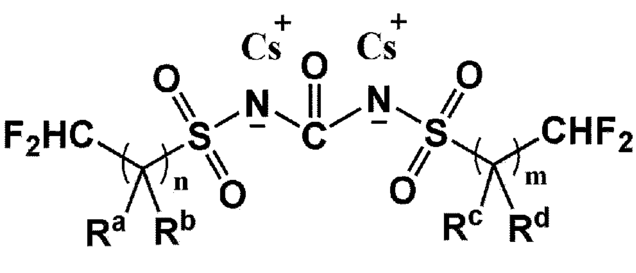

Chemische Formel 3-6

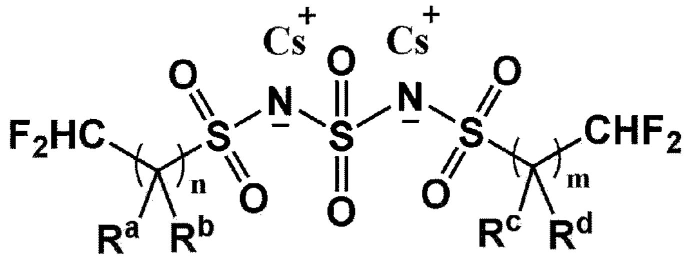

Chemische Formel 3-7

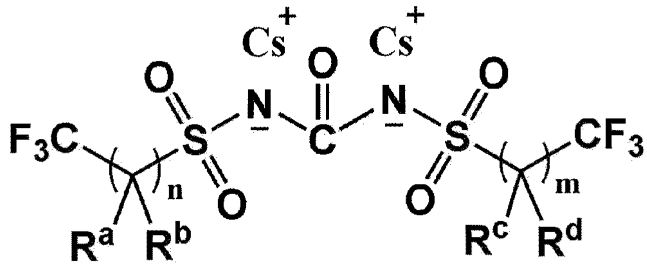

Chemische Formel 3-8

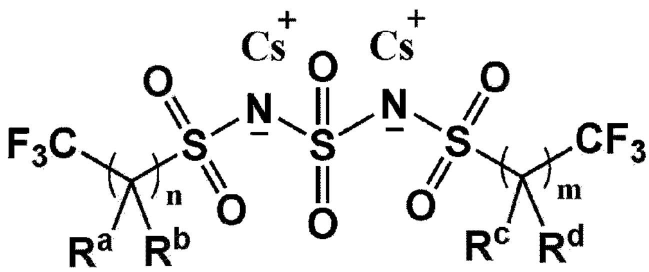

wobei in der chemischen Formel 3-3 bis zur chemischen Formel 3-8
$R^a$, $R^b$, $R^c$ und $R^d$ jeweils unabhängig voneinander Wasserstoff oder ein Fluoratom sind und
n und m jeweils unabhängig voneinander eine aus 0 bis 4 ausgewählte ganze Zahl sind.

**11.** Elektrolytlösung nach einem der vorstehenden Ansprüche, wobei:

die Elektrolytlösung für eine wiederaufladbare Lithiumbatterie ferner weitere Zusatzstoffe umfasst, und
die weiteren Zusatzstoffe mindestens eine aus Vinylencarbonat (VC), Fluorethylencarbonat (FEC), Difluorethylencarbonat (DFEC), Chlorethylencarbonat (CEC), Dichlorethylencarbonat (DCEC), Bromethylencarbonat (BEC), Dibromethylencarbonat (DBEC), Nitroethylencarbonat, Cyanoethylencarbonat, Vinylethylencarbonat (VEC), Succinonitril (SN), Adiponitril (AN), 1,3,6-Hexantricyanid (HTCN), Propensulton (PST), Propansulton (PS), Lithiumtetrafluorborat ($LiBF_4$), Lithiumdifluorophosphat ($LiPO_2F_2$) und 2-Fluorbiphenyl (2-FBP) ausgewählte Substanz umfassen.

**12.** Wiederaufladbare Lithiumbatterie (100), umfassend:

eine positive Elektrode (10), die ein positives Elektrodenaktivmaterial umfasst;
eine negative Elektrode (20), die ein negatives Elektrodenaktivmaterial umfasst;
einen Separator zwischen der positiven Elektrode (10) und der negativen Elektrode (20); und
die Elektrolytlösung nach Anspruch 1.

**13.** Wiederaufladbare Lithiumbatterie nach Anspruch 12, wobei:
das positive Elektrodenaktivmaterial ein Lithium-Kobalt-basiertes Oxid umfasst.

**14.** Wiederaufladbare Lithiumbatterie nach Anspruch 13, wobei:

das Lithium-Kobalt-basierte Oxid durch die chemische Formel 4 dargestellt ist:

Chemische Formel 4 $Li_{a1}CO_{x1}M^1_{(1-x1)}O_2$

wobei in der chemischen Formel 4 $0{,}9 \leq a1 \leq 1{,}8$, $0{,}7 \leq x1 \leq 1$ und $M^1$ ein oder mehrere Elemente sind, die aus Al, B, Ba, Ca, Ce, Cr, Cu, F, Fe, Mg, Mn, Mo, Ni, P, S, Se, Si, Sr, Ti, V, W, Y, Zn und Zr ausgewählt sind.

**15.** Wiederaufladbare Lithiumbatterie nach Anspruch 12, wobei das negative Elektrodenaktivmaterial kristallinen Kohlenstoff umfasst.

## Revendications

**1.** Solution électrolytique pour une batterie rechargeable au lithium (100), comportant :

un solvant organique non aqueux, un sel de lithium et un additif,
**caractérisée en ce que** l'additif comporte un premier composé représenté par la Formule chimique 1 et un deuxième composé qui est $CsPF_6$ ou un composé représenté par la Formule chimique 2,
un rapport pondéral du premier composé au deuxième composé est de 1: 0,3 à 1: 1,3,
le premier composé est inclus dans la solution électrolytique en une quantité de 0,1 % en poids à 10,0 % en poids sur la base d'un poids total de la solution électrolytique pour une batterie rechargeable au lithium, et,
le deuxième composé est inclus dans la solution électrolytique en une quantité de 0,01 % en poids à 5 % en poids sur la base d'un poids total de la solution électrolytique pour une batterie rechargeable au lithium :

Formule chimique 1

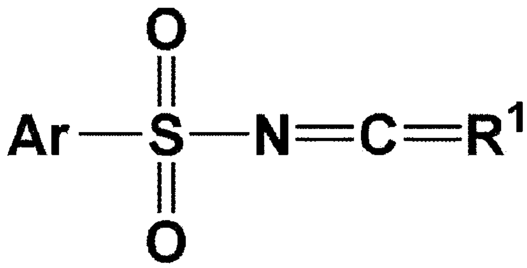

dans laquelle, dans la Formule chimique 1,

Ar est un groupe aryle en C6 à C30 substitué ou non substitué, ou un groupe hétérocyclique en C2 à C30 substitué ou non substitué, et
$R^1$ est O,

Formule chimique 2

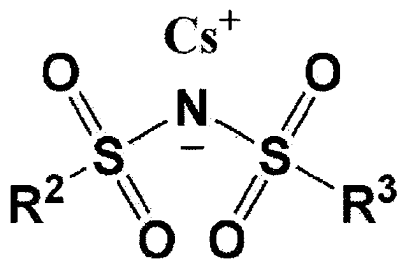

dans laquelle, dans la Formule chimique 2,

$R^2$ et $R^3$ sont chacun indépendamment un atome de fluor, ou un groupe fluoroalkyle en C1 à C4 substitué par au moins un atome de fluor,

dans laquelle le terme « substitué » désigne le remplacement d'au moins un hydrogène d'un substituant ou d'un composé par le deutérium, un halogène, un groupe hydroxyle, un groupe amino, un groupe amine en C1 à C30, un groupe nitro, un groupe silyle en C1 à C40, un groupe alkyle en C1 à C30, un groupe alkylsilyle en C1 à C10, un groupe arylsilyle en C6 à C30, un groupe cycloalkyle en C3 à C30, un groupe hétérocycloalkyle en C3 à C30, un groupe aryle en C6 à C30, un groupe hétéroaryle en C2 à C30, un groupe alcoxy en C1 à C20, un groupe fluoroalkyle en C1 à C10, un groupe cyano ou une combinaison de ceux-ci.

**2.** Solution électrolytique selon la revendication 1, dans laquelle :
le rapport pondéral du premier composé au deuxième composé est de 1: 0,5 à 1: 1,25.

**3.** Solution électrolytique selon la revendication 1 ou 2, dans laquelle :
le premier composé est inclus dans la solution électrolytique en une quantité de 0,5 % en poids à 2,0 % en poids sur la base d'un poids total de la solution électrolytique pour une batterie rechargeable au lithium.

**4.** Solution électrolytique selon l'une quelconque des revendications précédentes, dans laquelle :
le deuxième composé est inclus dans la solution électrolytique en une quantité de 0,25 % en poids à 1,25 % en poids sur la base d'un poids total de la solution électrolytique pour une batterie rechargeable au lithium.

**5.** Solution électrolytique selon l'une quelconque des revendications précédentes, dans laquelle :
le premier composé est représenté par la Formule chimique 1A :

Formule chimique 1A

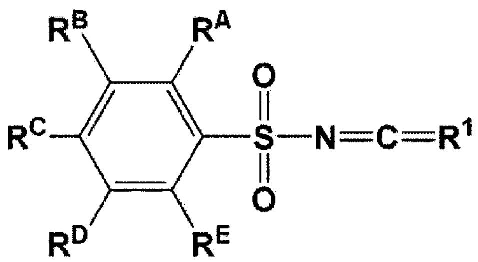

dans laquelle, dans la Formule chimique 1A,

$R^A$, $R^B$, $R^C$, $R^D$ et $R^E$ sont chacun indépendamment hydrogène, un halogène, un groupe hydroxyle, un groupe cyano, un groupe nitro, un groupe alkyle en C1 à C20 substitué ou non substitué, un groupe alcoxy en C1 à C20 substitué ou non substitué, un groupe alcényle en C2 à C20 substitué ou non substitué, un groupe alcynyle en C2 à C20 substitué ou non substitué, un groupe cycloalkyle en C3 à C20 substitué ou non substitué, un groupe aryle en C6 à C20 substitué ou non substitué, ou un groupe hétéroaryle en C2 à C20 substitué ou non substitué, et $R^1$ est O,
dans laquelle le terme « substitué » désigne le remplacement d'au moins un hydrogène d'un substituant ou d'un composé par le deutérium, un halogène, un groupe hydroxyle, un groupe amino, un groupe amine en C1 à C30, un groupe nitro, un groupe silyle en C1 à C40, un groupe alkyle en C1 à C30, un groupe alkylsilyle en C1 à C10, un groupe arylsilyle en C6 à C30, un groupe cycloalkyle en C3 à C30, un groupe hétérocycloalkyle en C3 à C30, un groupe aryle en C6 à C30, un groupe hétéroaryle en C2 à C30, un groupe alcoxy en C1 à C20, un groupe fluoroalkyle en C1 à C10, un groupe cyano.

**6.** Solution électrolytique selon la revendication 5, dans laquelle :
dans la Formule chimique 1A, $R^A$, $R^B$, $R^C$, $R^D$ et $R^E$ sont chacun indépendamment hydrogène, un halogène ou un groupe alkyle en C1 à C10 substitué ou non substitué.

**7.** Solution électrolytique selon l'une quelconque des revendications précédentes, dans laquelle :
le premier composé est représenté par l'une quelconque sélectionnée parmi la Formule chimique 1A-1 à la Formule chimique 1A-3 :

Formule chimique 1A-1

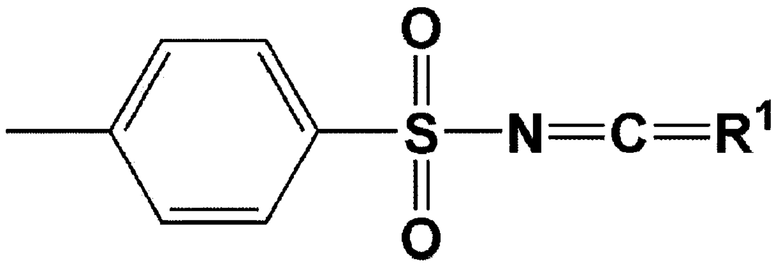

Formule chimique 1A-2

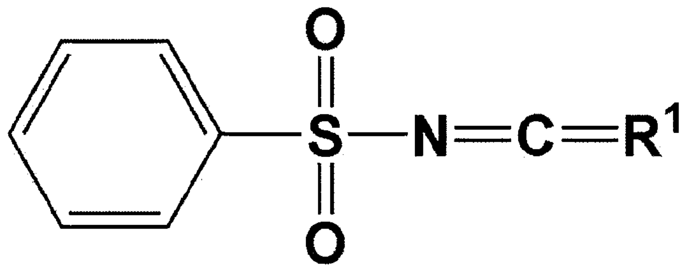

Formule chimique 1A-3

dans laquelle, dans la Formule chimique 1A-1 à la Formule chimique 1A-3,
$R^1$ est O.

**8.** Solution électrolytique selon l'une quelconque des revendications précédentes, dans laquelle :

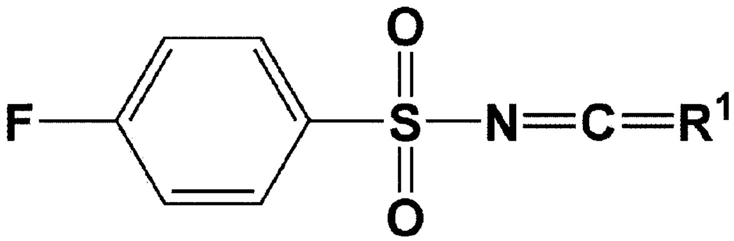

le composé représenté par la Formule chimique 2 est représenté par la Formule chimique 2-1 ou la Formule chimique 2-2 :

Formule chimique 2-1

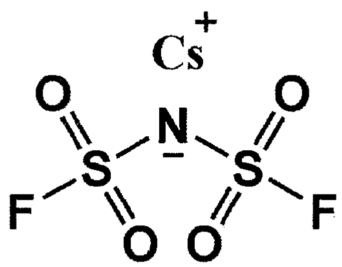

Formule chimique 2-2

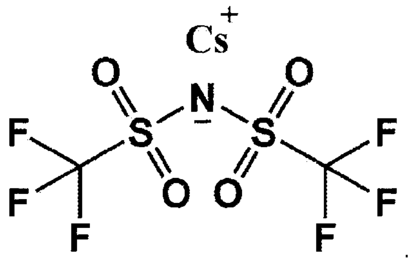

9. Solution électrolytique selon l'une quelconque des revendications précédentes, dans laquelle :

l'additif comporte en outre un troisième composé représenté par la Formule chimique 3 :

Formule chimique 3

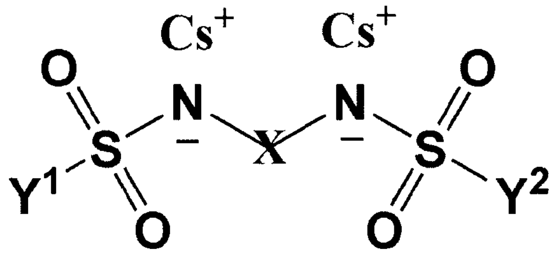

dans laquelle, dans la formule chimique 3, X est C(=O) ou $S(=O)_2$, et
$Y^1$ et $Y^2$ sont chacun indépendamment un atome de fluor ou un groupe fluoroalkyle en C1 à C5 substitué par au moins un atome de fluor.

10. Solution électrolytique selon la revendication 9, dans laquelle :
le troisième composé est représenté par l'une quelconque sélectionnée parmi la Formule chimique 3-1 à la Formule chimique 3-8 :

Formule chimique 3-1

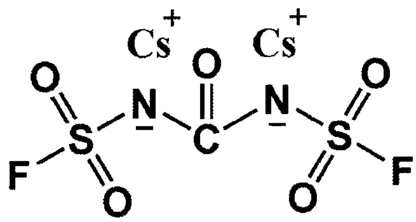

Formule chimique 3-2

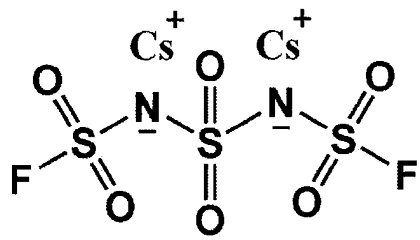

Formule chimique 3-3

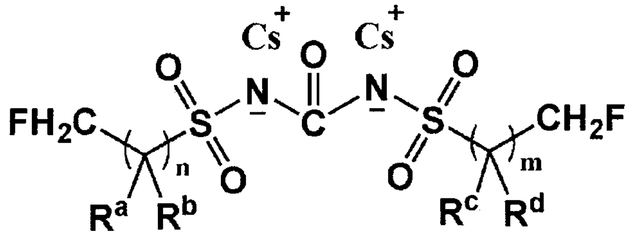

Formule chimique 3-4

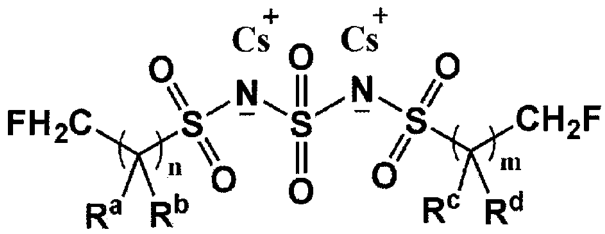

Formule chimique 3-5

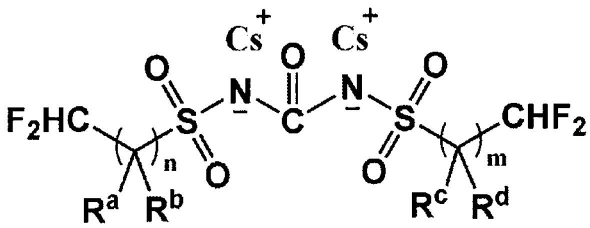

Formule chimique 3-6

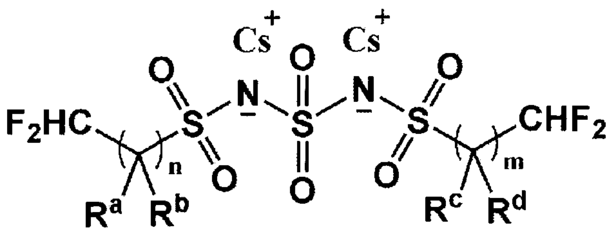

Formule chimique 3-7

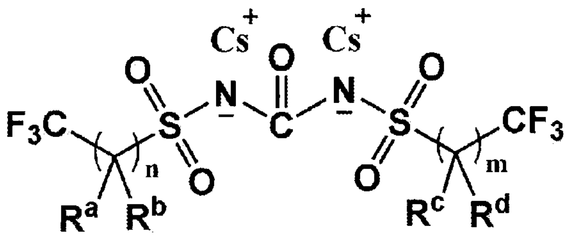

Formule chimique 3-8

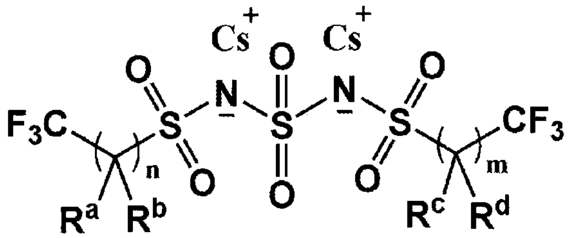

dans laquelle, dans la Formule chimique 3-3 à la Formule chimique 3-8,
$R^a$, $R^b$, $R^c$ et $R^d$ sont chacun indépendamment hydrogène ou un atome de fluor, et n et m sont chacun indépendamment sélectionnés parmi des entiers de 0 à 4.

**11.** Solution électrolytique selon l'une quelconque des revendications précédentes, dans laquelle :

la solution électrolytique pour une batterie rechargeable au lithium comporte en outre d'autres additifs, et
les autres additifs comportent au moins l'un sélectionné parmi le carbonate de vinylène (VC), le carbonate de fluoroéthylène (FEC), le carbonate de difluoroéthylène (DFEC), le carbonate de chloroéthylène (CEC), le carbonate de dichloroéthylène (DCEC), le carbonate de bromoéthylène (BEC), le carbonate de dibromoéthylène (DBEC), le carbonate de nitroéthylène, le carbonate de cyanoéthylène, le carbonate de vinyléthylène (VEC), le succinonitrile (SN), l'adiponitrile (AN), le tricyanure de 1,3,6-hexane (HTCN), le propènesultone (PST), le propanesultone (PS), le tétrafluoroborate de lithium ($LiBF_4$), le difluorophosphate de lithium ($LiPO_2F_2$) et le 2-fluorobiphényle (2-FBP).

**12.** Batterie rechargeable au lithium (100), comportant :

une électrode positive (10) comportant un matériau actif d'électrode positive ;
une électrode négative (20) comportant un matériau actif d'électrode négative ;
un séparateur entre l'électrode positive (10) et l'électrode négative (20) ; et
la solution électrolytique selon la revendication 1.

**13.** Batterie rechargeable au lithium selon la revendication 12, dans laquelle :
le matériau actif d'électrode positive comporte un oxyde à base de lithium-cobalt.

**14.** Batterie rechargeable au lithium selon la revendication 13, dans laquelle :

l'oxyde à base de lithium-cobalt est représenté par la Formule chimique 4 :

Formule chimique 4 $Li_{a1}Co_{x1}M^1_{(1-x1)}O_2$

dans laquelle, dans la Formule chimique 4, $0,9 \leq a1 \leq 1,8$, $0,7 \leq x\ 1 \leq 1$, et $M^1$ est un ou plusieurs éléments sélectionnés parmi Al, B, Ba, Ca, Ce, Cr, Cu, F, Fe, Mg, Mn, Mo, Ni, P, S, Se, Si, Sr, Ti, V, W, Y, Zn et Zr.

**15.** Batterie rechargeable au lithium selon la revendication 12, dans laquelle : le matériau actif d'électrode négative comporte du carbone cristallin.

FIG. 1

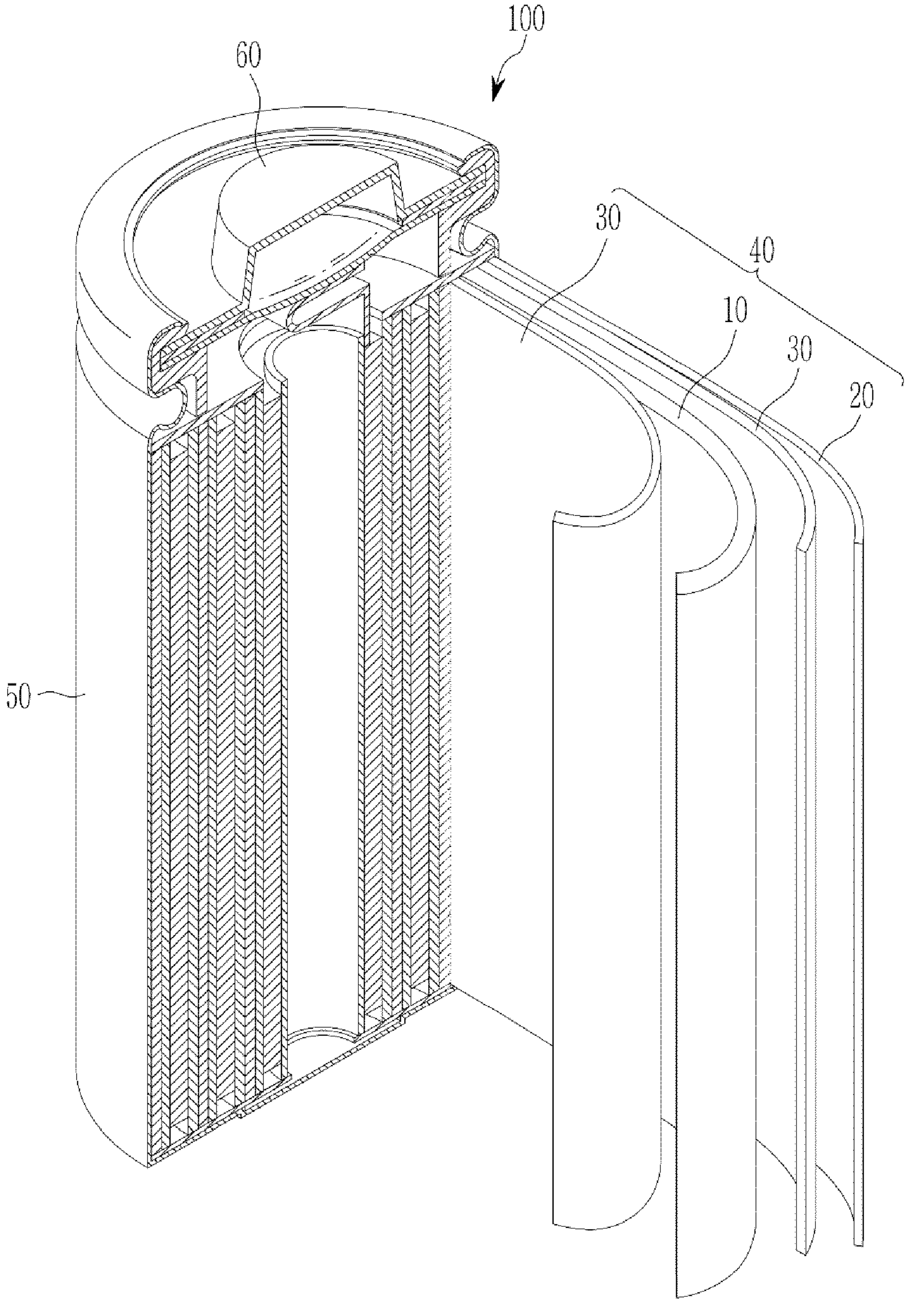

FIG. 2

100

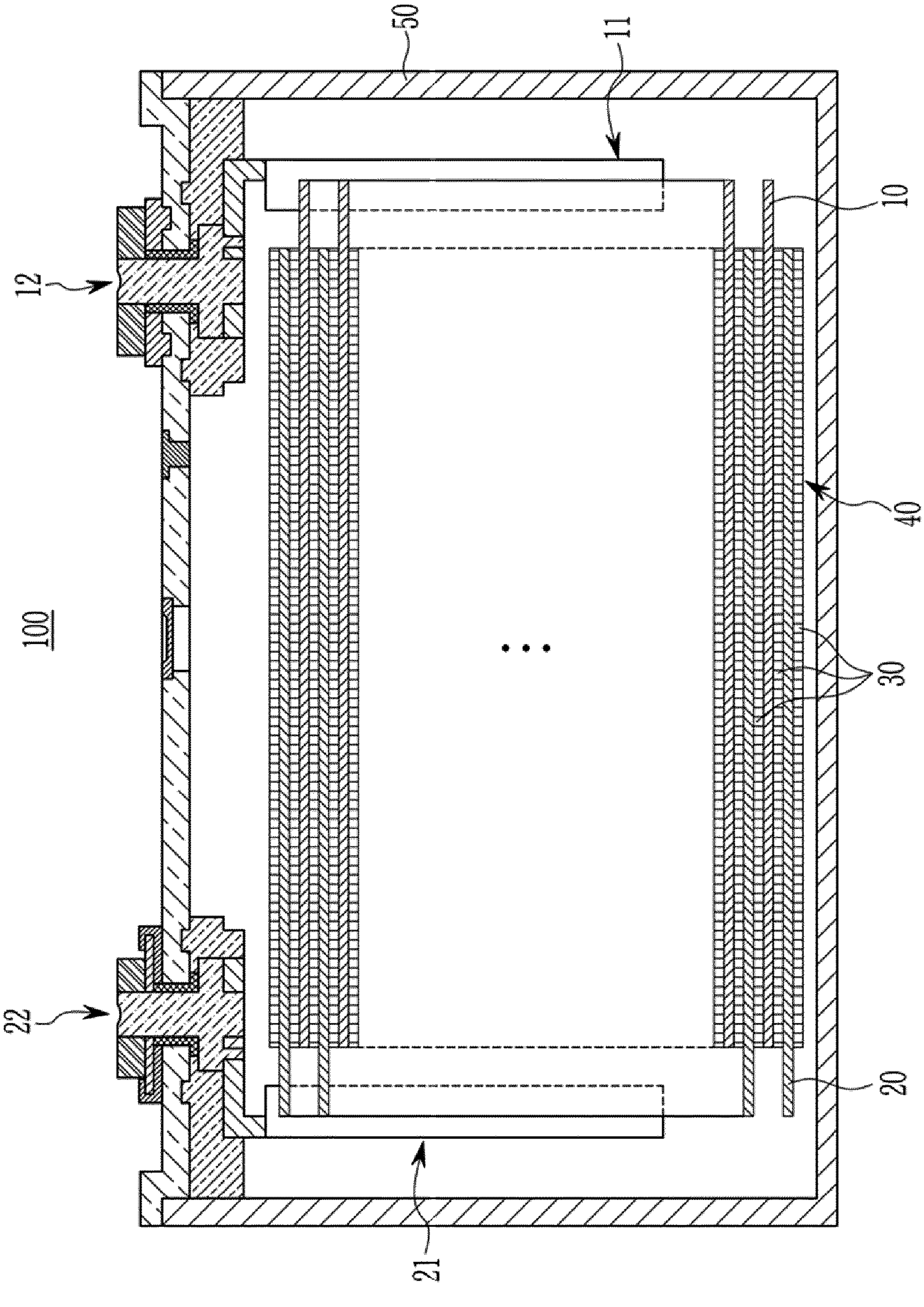

FIG. 3

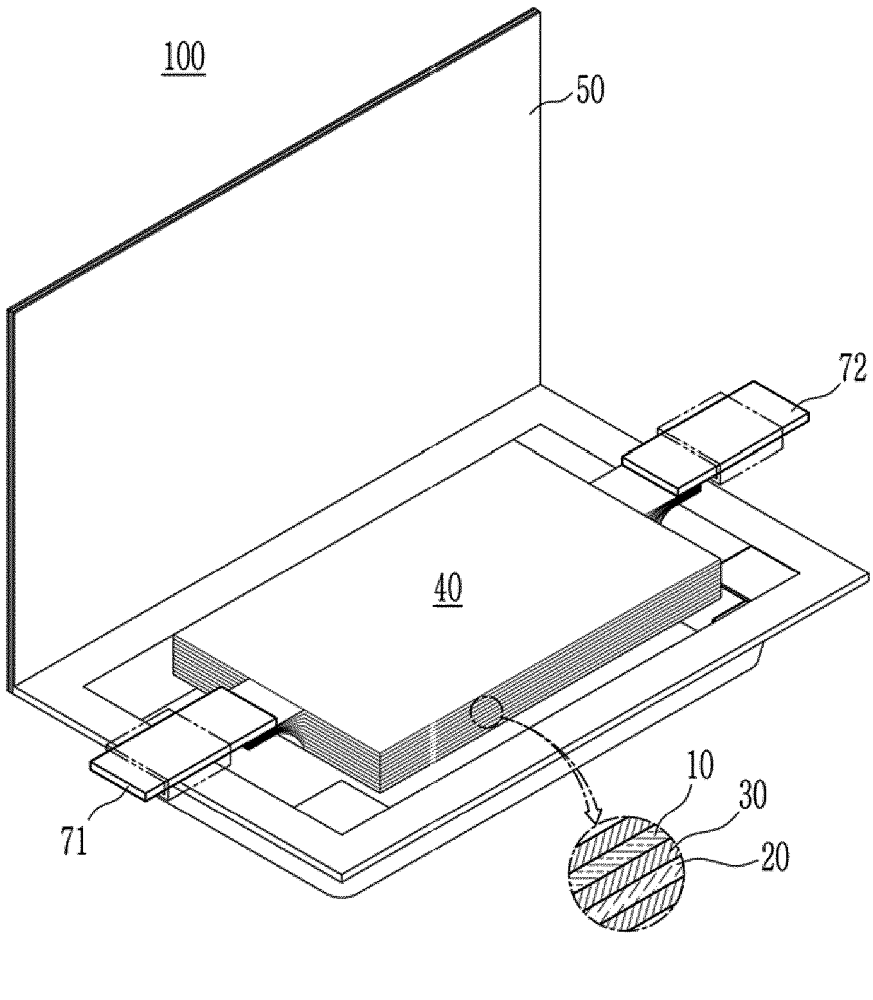

FIG. 4

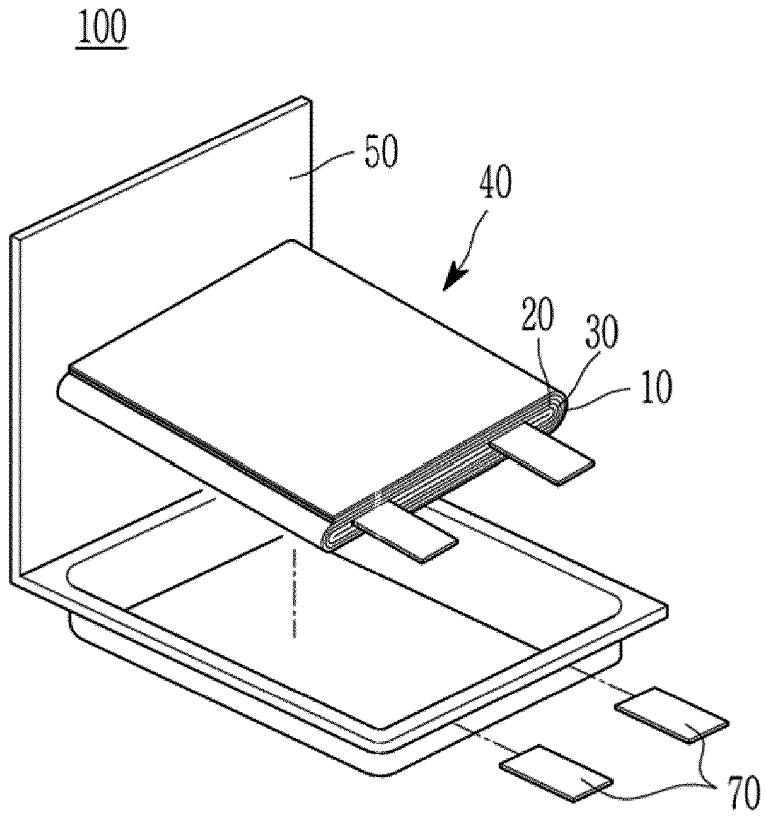

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2023003133 A1
- WO 2022203206 A1
- US 20200212486 A1


### Non-patent literature cited in the description


- **F. DING**. *Journal of The Electrochemical Society*, 2021, vol. 168, 120508
- *J. Phys. Chem. C2014*, vol. 118, 4043-4049